(19) Europäisches Patentamt
European Patent Office
Office européen des brevets

(11) EP 3 431 526 B1

(12) EUROPEAN PATENT SPECIFICATION

(45) Date of publication and mention of the grant of the patent:
**08.04.2020 Bulletin 2020/15**

(51) Int Cl.:
***C08J 3/20*** *(2006.01)* ***C08L 9/06*** *(2006.01)*
***B60C 1/00*** *(2006.01)*

(21) Application number: **18182371.7**

(22) Date of filing: **09.07.2018**

# (54) MANUFACTURING METHOD FOR MANUFACTURING RUBBER COMPOSITION FOR TIRE AND TIRE MANUFACTURING METHOD

VERFAHREN ZUR HERSTELLUNG EINER KAUTSCHUKZUSAMMENSETZUNG FÜR REIFEN UND REIFENHERSTELLUNGSVERFAHREN

PROCÉDÉ DE FABRICATION DE COMPOSITION DE CAOUTCHOUC POUR PNEU ET PROCÉDÉ DE FABRICATION DE PNEU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.07.2017 JP 2017140900**

(43) Date of publication of application:
**23.01.2019 Bulletin 2019/04**

(73) Proprietor: **Sumitomo Rubber Industries, Ltd.**
**Kobe-shi, Hyogo 651-0072 (JP)**

(72) Inventors:
- **TANAKA, Tatsuhiro**
**Kobe-shi, Hyogo 651-0072 (JP)**
- **NAGASE, Takayuki**
**Kobe-shi, Hyogo 651-0072 (JP)**
- **IKEDA, Keiji**
**Kobe-shi, Hyogo 651-0072 (JP)**

(74) Representative: **TBK**
**Bavariaring 4-6**
**80336 München (DE)**

(56) References cited:
**EP-A1- 3 178 877**
**EP-A1- 3 300 921**
**US-A1- 2012 053 263**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

BACKGROUND OF THE INVENTION

Field of the Invention

The present invention relates to a manufacturing method for manufacturing a rubber composition for a tire and a tire manufacturing method.

Description of the Background Art

In recent years, from the viewpoint of resource saving, energy saving, and, further, environmental protection, social needs for reducing carbon dioxide emissions are enhanced. Various measures such as reduction of weight and utilizing of electric energy are considered to be taken also for automobiles. Therefore, reduction of rolling resistance of an automobile tire and improvement for low fuel consumption are required. Furthermore, improvement of performance such as durability is also required.

For example, as a method for reducing rolling resistance, techniques such as blending of silica, reduction of filler, and use of filler having low reinforcing properties are known. However, mechanical strength of rubber and the like are reduced, and various performances tend to be degraded.

Furthermore, Japanese Laid-Open Patent Publication No. 2009-120819 suggests that a silane coupling agent (mercapto silane coupling agent) having a mercapto group which has a high reactivity is used in order to improve performance for low fuel consumption and the like. However, while a mercapto silane coupling agent allows low fuel consumption, wet grip performance, and wear resistance to be advantageously obtained, the mercapto silane coupling agent may gel while kneaded with rubber components or the like due to its high reactivity and processability may be deteriorated.

Meanwhile, Japanese Laid-Open Patent Publication No. 2012-046602 discloses a rubber composition, for a base tread, which allows low fuel consumption, elongation at break, and durability to be improved in a well-balanced manner while maintaining advantageous steering stability and processability (extrusion processability) even in a case where an amount of zinc oxide is reduced, and in which crosslinking between polymers can be made more uniform by a predetermined kind of zinc dithiophosphate being blended.

SUMMARY OF THE INVENTION

However, Japanese Laid-Open Patent Publication No. 2012-046602 merely indicates that the predetermined kind of zinc dithiophosphate acts as a crosslinking activator, and indicates that natural rubber, modified butadiene rubber, and modified styrene butadiene rubber or butadiene rubber is used as rubber components and all of them are kneaded with a silane coupling agent having a mercapto group and the predetermined kind of zinc dithiophosphate in the same process step. There is room for further improvement of processability.

An object of the present invention is to provide a manufacturing method for manufacturing a rubber composition for a tire and a tire manufacturing method in each of which processability can be made more advantageous even when a silane coupling agent having a mercapto group is blended.

The inventers of the present invention have found, as a result of thorough study, that a manufacturing method for manufacturing a rubber composition, for a tire, which contains a rubber component (A) having at least two kinds of rubber components, a compound (B) represented by Formula (1), and a silane coupling agent (C) having a mercapto group is provided such that the method includes: a step X1 of kneading the compound (B), and a first rubber component, of the rubber component (A), having a lower activating ability with respect to a mercapto group; a step X2 of kneading the silane coupling agent (C) with a kneaded product obtained in the step XI; and a step X3 of kneading a second rubber component, of the rubber component (A), having a higher activating ability with respect to a mercapto group than the first rubber component, with a kneaded product obtained in the step X2, and, thus, the processability of unvulcanized rubber can be improved and the aforementioned problem can be solved. The inventors of the present invention have made further study to complete the present invention.

That is, the present invention is directed to

[1] a manufacturing method for manufacturing a rubber composition, for a tire, which contains a rubber component (A) having at least two kinds of rubber components, a compound (B) represented by Formula (1), and a silane coupling agent (C) having a mercapto group, the manufacturing method including: a step X1 of kneading a first rubber component of the rubber component (A) and the compound (B); a step X2 of adding the silane coupling agent (C) to a kneaded product obtained in the step X1, and kneading a product obtained by the addition; and a

step X3 of adding a second rubber component of the rubber component (A) to a kneaded product obtained in the step X2, and kneading a product obtained by the addition, in which the first rubber component has a lower activating ability with respect to a mercapto group than the second rubber component,

[Chemical Formula 1]

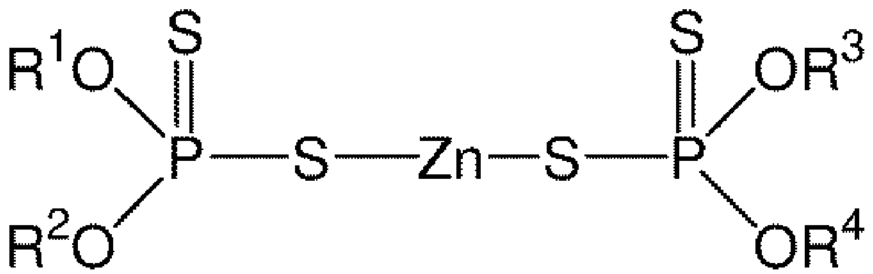

(1)

(In the Formula, $R^1$ to $R^4$ each independently represent a straight chain or branched chain alkyl group having 1 to 18 carbon atoms, or a cycloalkyl group having 5 to 12 carbon atoms.),

[2] the manufacturing method based on [1] in which the rubber component (A) includes a diene rubber of not less than 50% by mass, preferably 60% by mass, and more preferably 70% by mass such that, in the diene rubber, a styrene content is 25 to 50% by mass, preferably 28 to 47% by mass, and more preferably 31 to 44% by mass, and an amount of vinyl bonds is 10 to 35% by mol, preferably 12 to 33% by mol, and more preferably 14 to 31% by mol,

[3] the manufacturing method based on [2] in which the styrene content is not less than twice the amount of vinyl bonds, and preferably not less than 2.2 times the amount of vinyl bonds,

[4] the manufacturing method based on any one of [1] to [3] in which the silane coupling agent having a mercapto group is a compound represented by Formula (2), and/or a compound that contains a bond unit A represented by Formula (3) and a bond unit B represented by Formula (4),

[Chemical Formula 2]

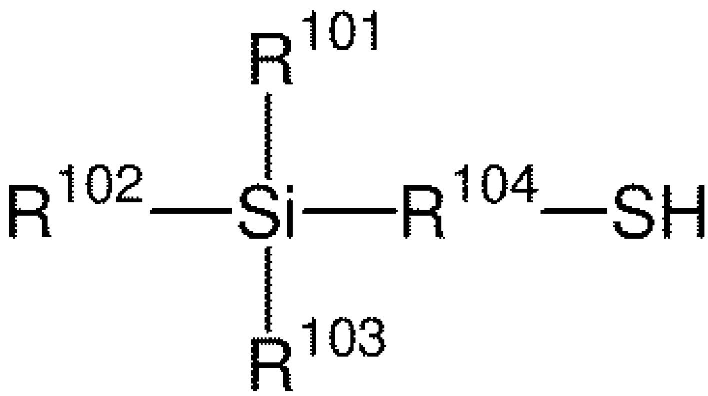

(2)

(In the Formula, $R^{101}$ to $R^{103}$ each represent a straight chain or branched chain alkyl group having 1 to 12 carbon atoms, a straight chain or branched chain alkoxy group having 1 to 12 carbon atoms, or a group represented by $-O-(R^{111}-O)_z-R^{112}$ (z pieces of $R^{111}$ each represent a divalent straight chain or branched chain hydrocarbon group having 1 to 30 carbon atoms. z pieces of $R^{111}$ may be the same or different from each other. $R^{112}$ represents a straight chain or branched chain alkyl group having 1 to 30 carbon atoms, a straight chain or branched chain alkenyl group having 2 to 30 carbon atoms, an aryl group having 6 to 30 carbon atoms, or an aralkyl group having 7 to 30 carbon atoms. z represents an integer of 1 to 30). $R^{101}$ to $R^{103}$ may be the same or different from each other. $R^{104}$ represents a straight chain or branched chain alkylene group having 1 to 6 carbon atoms.)

[Chemical Formula 3]

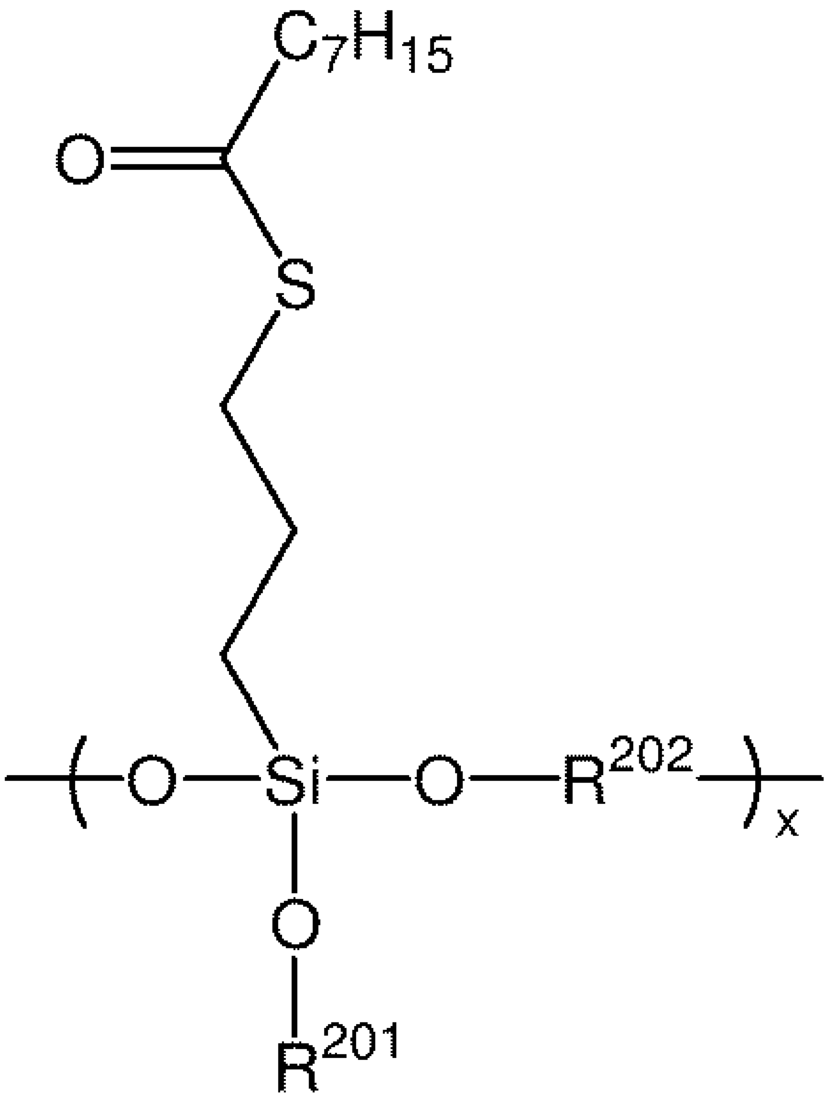

(3)

[Chemical Formula 4]

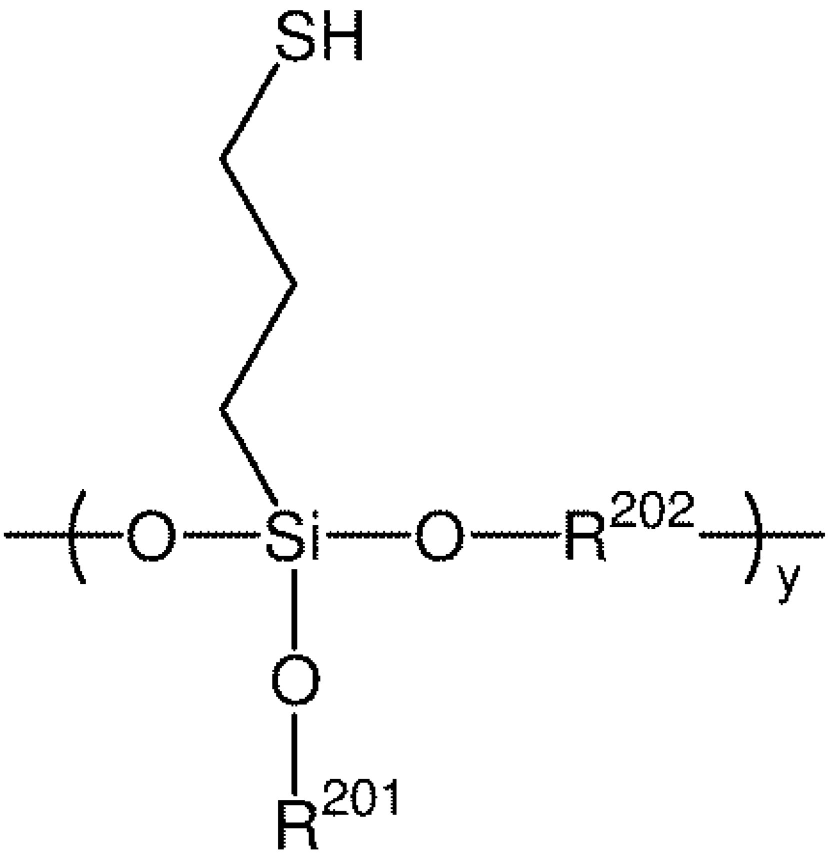

(4)

(In the Formula, x is an integer that is not less than 0, and y is an integer that is not less than 1. $R^{201}$ represents a hydrogen atom, a halogen atom, a straight chain or branched chain alkyl group having 1 to 30 carbon atoms, a straight chain or branched chain alkenyl group having 2 to 30 carbon atoms, a straight chain or branched chain alkynyl group having 2 to 30 carbon atoms, or the alkyl group obtained by substituting a hydrogen atom at the end thereof with a hydroxyl group or a carboxyl group. $R^{202}$ represents a straight chain or branched chain alkylene group having 1 to 30 carbon atoms, a straight chain or branched chain alkenylene group having 2 to 30 carbon atoms, or a straight chain or branched chain alkynylene group having 2 to 30 carbon atoms. $R^{201}$ and $R^{202}$ may form a ring structure.)

[5] a tire manufacturing method including: a forming step of forming a tire component by using a rubber composition, for a tire, which is obtained by the manufacturing method based on any one of [1] to [4] before vulcanization, combining the tire component with other tire components, and forming a green tire, and a vulcanizing step of vulcanizing the green tire obtained in the forming step,

[6] a rubber composition, for a tire, including: a rubber component (A) having at least two kinds of rubber components; a compound (B) represented by Formula (1); and a silane coupling agent (C) having a mercapto group, in which, for forming the rubber composition, a kneaded product is obtained by a first rubber component of the rubber component (A) and the compound (B) being kneaded, the silane coupling agent (C) is added to and kneaded with the kneaded product; and a second rubber component of the rubber component (A) is added to and kneaded with a kneaded product obtained by the silane coupling agent (C) being added and kneaded, and the first rubber component has a lower activating ability with respect to a mercapto group than the second rubber component,

[Chemical Formula 5]

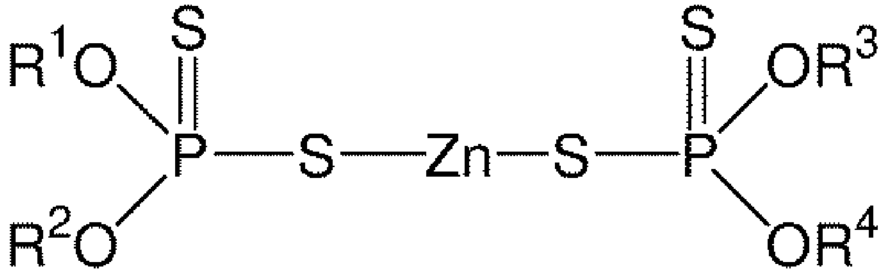

(1)

(In the Formula, $R^1$ to $R^4$ each independently represent a straight chain or branched chain alkyl group having 1 to 18 carbon atoms, or a cycloalkyl group having 5 to 12 carbon atoms.), and

[7] a tire including a tire component formed from the rubber composition, for a tire, based on [6].

According to the present invention, provided is a manufacturing method for manufacturing a rubber composition, for a tire, which contains a rubber component (A) having at least two kinds of rubber components, a compound (B) represented by Formula (1) described above, and a silane coupling agent (C) having a mercapto group, and the manufacturing method includes a step X1 of kneading a first rubber component of the rubber component (A) and the compound (B), a step X2 of adding the silane coupling agent (C) to a kneaded product obtained in the step X1, and kneading a product obtained by the addition, and a step X3 of adding a second rubber component of the rubber component (A) to a kneaded product obtained in the step X2, and kneading a product obtained by the addition, and, in the manufacturing method, the first rubber component has a lower activating ability with respect to a mercapto group than the second rubber component. Therefore, in the manufacturing method for manufacturing a rubber composition for a tire, processability of unvulcanized rubber can be further improved.

DESCRIPTION OF THE PREFERRED EMBODIMENTS

The present invention is a manufacturing method for manufacturing a rubber composition, for a tire, which contains a rubber component (A) having at least two kinds of rubber components, a compound (B) represented by Formula (1) described above, and a silane coupling agent (C) having a mercapto group. The manufacturing method includes: a step X1 of kneading a first rubber component of the rubber component (A) and the compound (B); a step X2 of adding the silane coupling agent (C) to a kneaded product obtained in the step X1, and kneading a product obtained by the addition; and a step X3 of adding a second rubber component of the rubber component (A) to a kneaded product obtained in the step X2, and kneading a product obtained by the addition, and the first rubber component has a lower activating ability with respect to a mercapto group than the second rubber component.

In a case where the rubber component and silica are blended, when a silane coupling agent having a mercapto group is used, low fuel consumption and wet grip performance can be improved in a well-balanced manner, and improvement of wear resistance can be expected. Meanwhile, a problem arises that degradation of processability such as degradation of a sheet material in the mixture occurs. This may be because the mercapto group of the silane coupling agent is easily radicalized during the mixture and binds to the rubber component to gel. Meanwhile, in the present invention, the radicalized mercapto group of the silane coupling agent reacts with the -S-Zn- structure moiety in the compound represented by Formula (1) to form -S-S- bond (that is, a radical derived from the mercapto group is scavenged by the compound represented by Formula (1)) before reacting with the rubber component, whereby reactivity between the silane coupling agent and the rubber component is reduced and the gelling can be prevented. The reactivity of the silane coupling agent having a mercapto group is very high. Therefore, in the present invention, the compound represented by Formula (1) is kneaded with the rubber component not simultaneously when the silane coupling agent having a mercapto group is kneaded but before the silane coupling agent having a mercapto group is kneaded, such that the radical can be efficiently scavenged at the time when radicalizing of the silane coupling agent having a mercapto group starts. Furthermore, in a case where two or more kinds of rubber components having different reactivities with respect to a mercapto group are used, a rubber component having a lower activating ability with respect to a mercapto group is earlier kneaded with the silane coupling agent having a mercapto group. Thus, it can be considered that, even when there is room for improvement of scavenging the radical by the compound represented by Formula (1), gelling caused by the silane coupling agent having a mercapto group can be more assuredly reduced. It is considered that, when the temperature becomes high during vulcanization, a disulfide bond between the compound represented by Formula (1)

and the mercapto group is cleaved, and the mercapto group reacts with the rubber component and can function as the silane coupling agent.

In the description herein, the activating ability of the rubber component with respect to a mercapto group is a reactivity of the rubber component with respect to a mercapto group. The higher the activating ability of a rubber component is, the worse the surface state of the sheet material of the rubber component is, since the gelling as described above progresses when the rubber component is kneaded with the silane coupling agent having a mercapto group. Therefore, for the activating ability of each rubber component with respect to a mercapto group, a surface roughness of the sheet material obtained by using the silane coupling agent having a mercapto group is evaluated as an index. The surface roughness is measured as follows. That is, a specific silane coupling agent having a mercapto group is used, and a specific amount of the silane coupling agent with respect to 100 parts by mass of the rubber component to be evaluated is added and kneaded, to produce a rubber sheet, and the surface roughness of the surface of the rubber sheet material is measured by using a surface roughness meter based on the arithmetic average roughness Ra in JISB 0601. For the obtained result, a rubber component used as a reference is determined, and the average surface roughness (Ra) obtained for the rubber component is set to 100, and an index (activating ability index) of each rubber component is obtained, and the activating abilities of the respective rubber components with respect to the mercapto group are compared by using the indexes.

In the present invention, the rubber component (A) is not particularly limited as long as the rubber component (A) contains at least two kinds of rubber components having different activating abilities with respect to a mercapto group. Rubber components that are conventionally used for a rubber composition of a tire can be used in combination as appropriate. In the description herein, for the convenience sake, in a case where two kinds of rubber components are contained, a rubber component having a lower activating ability with respect to a mercapto group is referred to as a first rubber component, and a rubber component having a higher activating ability with respect to a mercapto group is referred to as a second rubber component. Whether each rubber component corresponds to the first rubber component or the second rubber component is determined depending on rubber components used in combination. Therefore, rubber components contained as the first and the second rubber components are not particularly limited. Furthermore, in the present invention, a rubber component, other than the first and the second rubber components, having a higher activating ability with respect to a mercapto group than the first rubber component and a lower activating ability with respect to a mercapto group than the second rubber component, can be contained.

In the present invention, difference in activating ability with respect to a mercapto group between the first rubber component and the second rubber component is preferably greater since the effect of the present invention is enhanced. For example, difference in index of activating ability with respect to a mercapto group, as described above, between the first rubber component and the second rubber component is preferably not less than 5, more preferably not less than 10, and even more preferably not less than 15.

In the present invention, examples of the rubber component contained in the rubber component (A) include diene rubber components such as: isoprene-based rubber such as natural rubber (NR) and polyisoprene rubber (IR); butadiene rubber (BR); styrene butadiene rubber (SBR); styrene-isoprene-butadiene rubber (SIBR); chloroprene rubber (CR); and acrylonitrile-butadiene rubber (NBR), and butyl-based rubber. The activating abilities of these rubber components with respect to a mercapto group vary according to presence or absence and a kind of a modifying group, a percentage of contained monomer units, and the like, and cannot be generally specified. In the case of being unmodified, the activating ability is influenced by, for example, a content of double bonds in a polymer, in particular, a percentage of double bonds, such as 1,2-vinyl bond, located at the end, in general. In the present invention, the rubber component (A) preferably contains one or more kinds of rubber components having conjugated diene compounds, and preferably contains SBR and BR from the viewpoint of balance among low fuel consumption, wear resistance, durability, and wet grip performance.

Furthermore, in the present invention, as the diene rubber, diene rubber in which a styrene content is 25 to 50% by mass, and an amount of vinyl bonds is 10 to 35% by mol is preferably used because wet skid performance, dry grip performance, and low fuel consumption are obtained in a well balanced manner. Examples of the diene rubber containing styrene and vinyl include SBR and SIBR.

A styrene content of the diene rubber is preferably not less than 25% by mass, more preferably not less than 28% by mass, and even more preferably not less than 31% by mass from the viewpoint of grip performance. When the styrene content is excessively great, styrene groups are adjacent to each other, a polymer becomes excessively hard, crosslinking is likely to be non-uniformly performed, blow resistance during running at high temperature is likely to be deteriorated, temperature dependency is increased, variation of performance according to temperature change is increased, and grip performance is less likely to be stably obtained during running and at the later stage. Therefore, the styrene content of the diene rubber is preferably not greater than 50% by mass, more preferably not greater than 47% by mass, and even more preferably not greater than 44% by mass. In the description herein, the styrene content of the diene rubber is calculated by $^{1}$H-NMR measurement.

The amount of vinyl bonds of the diene rubber is preferably not less than 10% by mol, more preferably not less

than 12% by mol, and even more preferably not less than 14% by mol from the viewpoint of assuring of reactivity with silica, rubber strength, and wear resistance. Furthermore, the amount of vinyl bonds of the diene rubber is preferably not greater than 35% by mol, more preferably not greater than 33% by mol, and even more preferably not greater than 31% by mol from the viewpoint of prevention of increase of temperature dependency, grip performance, EB (durability), and wear resistance. In the description herein, the amount of vinyl bonds in SBR (1,2-bond butadiene unit content) is measured by infrared absorption spectrometry.

In a case where the rubber component contains the diene rubber in which the styrene content is 25 to 50% by mass and the amount of vinyl bonds is 10 to 35% by mol, the content of the diene rubber in the rubber component is preferably not less than 50% by mass, more preferably not less than 60% by mass, and even more preferably not less than 70% by mass. When the content of the diene rubber is not less than 50% by mass, change of performance in a high temperature range is inhibited, and grip performance and blow resistance are more likely to be enhanced. Furthermore, the content of the diene rubber is preferably not greater than 90% by mass, more preferably not greater than 85% by mass, and even more preferably not greater than 80% by mass from the viewpoint of wear resistance, grip performance, and low fuel consumption.

Furthermore, in the diene rubber, the styrene content is preferably not less than twice the amount of vinyl bonds, and more preferably not less than 2.2 times the amount of vinyl bonds because both wet skid performance and low fuel consumption are obtained. Although the upper limit is not particularly limited, the styrene content is preferably not greater than 3.0 times the amount of vinyl bonds in the diene rubber. When the styrene content is greater than 3.0 times the amount of vinyl bonds, the glass transition temperature is excessively enhanced, and low fuel consumption and low temperature performance tend to be significantly deteriorated.

The SBR is not particularly limited. Examples of the SBR include emulsion-polymerized SBR (E-SBR) and solution-polymerized SBR (S-SBR). The SBR may be oil-extended or may not be oil-extended. Terminal-modified S-SBR or main chain-modified S-SBR having an enhanced interaction with filler can be used. Furthermore, a hydrogenated product of the SBR (hydrogenated SBR) or the like can be used. The SBR may be used alone, or two or more kinds of the SBRs may be used in combination.

The BR is not particularly limited. Examples of the BR include BRs which are generally used in the tire industry, such as BR (high cis BR) having a cis content of not less than 95%, rare earth butadiene rubber (rare earth BR) which is synthesized by using a rare earth element catalyst, BR (SPB-containing BR) containing syndiotactic polybutadiene crystals, and modified BR. Among them, high cis BR is preferably used because high cis BR has an excellent wear resistance.

In a case where the rubber component contains the BR, the content of the BR in the rubber component is preferably not less than 5% by mass and more preferably not less than 10% by mass. When the content of the BR is less than 5% by mass, the effect of improving wear resistance is less likely to be obtained. Furthermore, the content of the BR is preferably not greater than 35% by mass and more preferably not greater than 25% by mass. When the content of the BR is greater than 35% by mass, dry grip performance and wet grip performance tend to be significantly deteriorated.

In the present invention, the compound represented by Formula (1) is as follows.

[Chemical Formula 6]

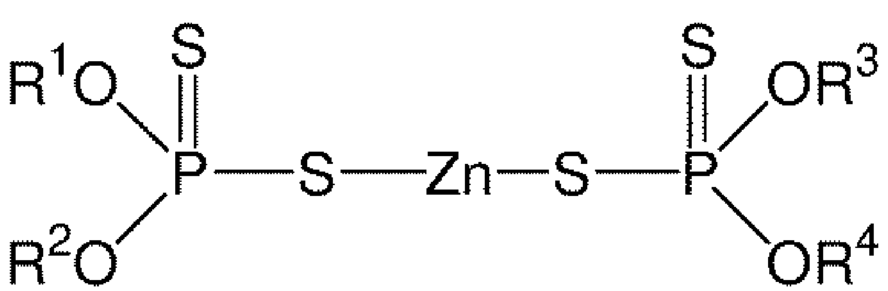

(1)

(In the Formula, $R^1$ to $R^4$ each independently represent a straight chain or branched chain alkyl group having 1 to 18 carbon atoms, or a cycloalkyl group having 5 to 12 carbon atoms.)

In Formula (1), $R^1$ to $R^4$ each independently represent a straight chain or branched chain alkyl group having 1 to 18 carbon atoms, or a cycloalkyl group having 5 to 12 carbon atoms. Examples of the straight chain or branched chain alkyl group represented by any one of $R^1$ to $R^4$ include methyl group, ethyl group, n-propyl group, iso-propyl group, n-butyl group, 4-methylpentyl group, 2- ethylhexyl group, octyl group, and octadecyl group. Examples of the cycloalkyl group include cyclopentyl group, cyclohexyl group, and cyclooctyl group. Among them, $R^1$ to $R^4$ are preferably each a

straight chain or branched chain alkyl group having 2 to 8 carbon atoms, and are preferably each n-butyl group, n-propyl group, iso-propyl group, or n-octyl group because they are easily dispersed in the rubber component and are easily produced.

As the compound represented by Formula (1), for example, TP-50 or ZBOP-50 manufactured by Rhein Chemie, or a compound (for example, compound in which $R^1$ to $R^4$ is each n-propyl group, iso-propyl group, or n-octyl group) similar thereto can be used

The content (content of active ingredient) of the compound represented by Formula (1) is preferably not less than 0.1 parts by mass, more preferably not less than 0.2 parts by mass, and even more preferably not less than 0.3 parts by mass, per 100 parts by mass of silica. When the content of the compound represented by Formula (1) is not less than 0.1 parts by mass, unvulcanized rubber sheet material tends to be significantly smooth after kneading. The content of the compound represented by Formula (1) is preferably not greater than 5 parts by mass and more preferably not greater than 3 parts by mass, per 100 parts by mass of silica. When the content of the compound represented by Formula (1) is not greater than 5 parts by mass, reduction of breaking strength and deterioration of wear resistance tend to be prevented.

The content of the compound represented by Formula (1) is preferably not less than 1 part by mass and more preferably not less than 3 parts by mass, per 100 parts by mass of the silane coupling agent having a mercapto group. When the content of the compound represented by Formula (1) is not less than 1 part by mass, unvulcanized rubber sheet material tends to be significantly smooth after kneading. The content of the compound represented by Formula (1) is preferably not greater than 100 parts by mass and more preferably not greater than 50 parts by mass, per 100 parts by mass of the silane coupling agent having a mercapto group. When the content of the compound represented by Formula (1) is not greater than 100 parts by mass, reduction of breaking strength and deterioration of wear resistance tend to be prevented.

In the present invention, the silane coupling agent having a mercapto group is preferably a compound represented by Formula (2), and/or a compound that contains a bond unit A represented by Formula (3) and a bond unit B represented by Formula (4).

[Chemical Formula 7]

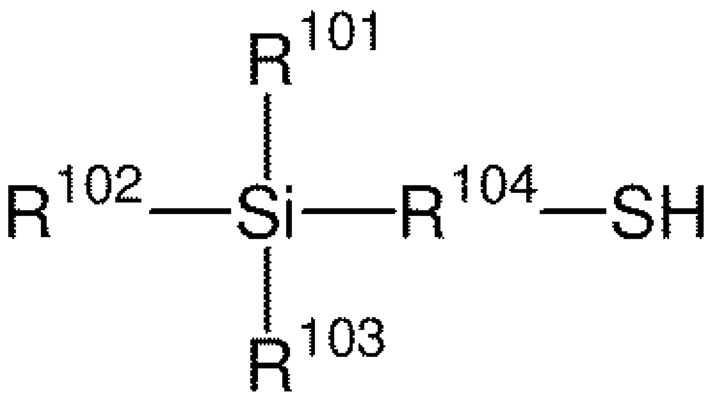

(2)

(In the Formula, $R^{101}$ to $R^{103}$ each represent a straight chain or branched chain alkyl group having 1 to 12 carbon atoms, a straight chain or branched chain alkoxy group having 1 to 12 carbon atoms, or a group represented by $-O-(R^{111}-O)_z-R^{112}$ (z pieces of $R^{111}$ each represent a divalent straight chain or branched chain hydrocarbon group having 1 to 30 carbon atoms. z pieces of $R^{111}$ may be the same or different from each other. $R^{112}$ represents a straight chain or branched chain alkyl group having 1 to 30 carbon atoms, a straight chain or branched chain alkenyl group having 2 to 30 carbon atoms, an aryl group having 6 to 30 carbon atoms, or an aralkyl group having 7 to 30 carbon atoms. z represents an integer of 1 to 30). $R^{101}$ to $R^{103}$ may be the same or different from each other. $R^{104}$ represents a straight chain or branched chain alkylene group having 1 to 6 carbon atoms.)

[Chemical Formula 8]

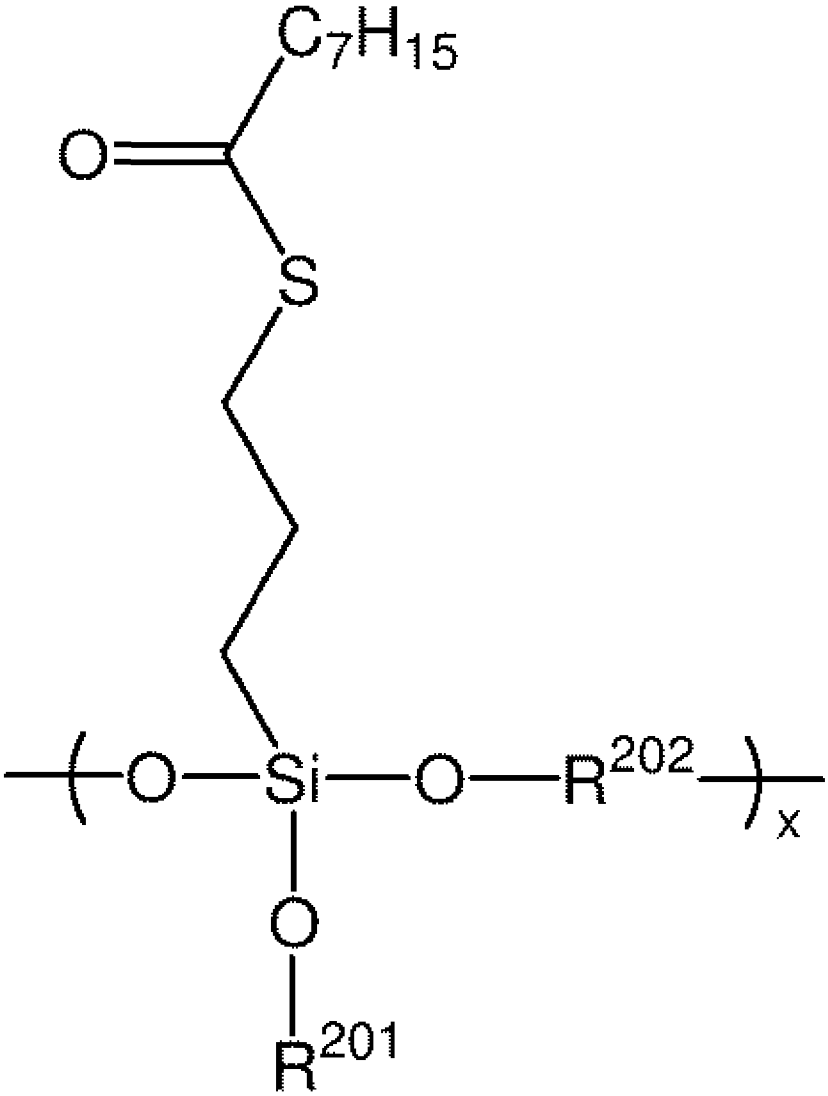

(3)

[Chemical Formula 9]

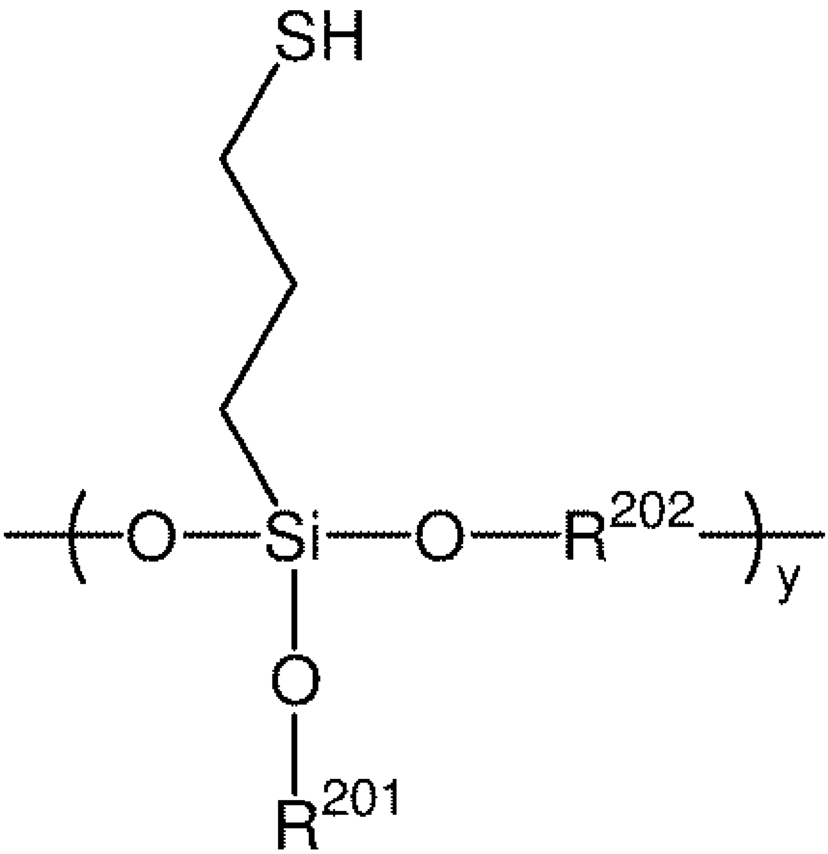

(4)

(In the Formula, x is an integer that is not less than 0, and y is an integer that is not less than 1. $R^{201}$ represents a hydrogen atom, a halogen atom, a straight chain or branched chain alkyl group having 1 to 30 carbon atoms, a straight chain or branched chain alkenyl group having 2 to 30 carbon atoms, a straight chain or branched chain alkynyl group having 2 to 30 carbon atoms, or the alkyl group obtained by substituting a hydrogen atom at the end thereof with a hydroxyl group or a carboxyl group. $R^{202}$ represents a straight chain or branched chain alkylene group having 1 to 30 carbon atoms, a straight chain or branched chain alkenylene group having 2 to 30 carbon atoms, or a straight chain or branched chain alkenylene group having 2 to 30 carbon atoms. $R^{201}$ and $R^{202}$ may form a ring structure.)

The compound represented by Formula (2) will be described below.

$R^{101}$ to $R^{103}$ each represents a straight chain or branched chain alkyl group having 1 to 12 carbon atoms, a straight chain or branched chain alkoxy group having 1 to 12 carbon atoms, or a group represented by $-O-(R^{111}-O)_z-R^{112}$. In order to advantageously obtain the effect of the present invention, at least one of $R^{101}$ to $R^{103}$ is preferably a group represented by$-O-(R^{111}-O)_z-R^{112}$. More preferably, two of $R^{101}$ to $R^{103}$ are each a group represented by $-O-(R^{111}-O)_z-R^{112}$, and one thereof is a straight chain or branched chain alkoxy group having 1 to 12 carbon atoms.

As to $R^{101}$ to $R^{103}$, examples of the straight chain or branched chain alkyl group having 1 to 12 carbon atoms (preferably 1 to 5 carbon atoms) include methyl group, ethyl group, n-propyl group, iso-propyl group, n-butyl group, iso-butyl group, sec-butyl group, tert-butyl group, pentyl group, hexyl group, heptyl group, 2-ethylhexyl group, octyl group, and nonyl group.

As to $R^{101}$ to $R^{103}$, examples of the straight chain or branched chain alkoxy group having 1 to 12 carbon atoms (preferably 1 to 5 carbon atoms) include methoxy group, ethoxy group, n-propoxy group, isopropoxy group, n-butoxy group, iso-butoxy group, sec-butoxy group, tert-butoxy group, pentyloxy group, hexyloxy group, heptyloxy group, 2-ethylhexyloxy group, octyloxy group, and nonyloxy group.

As to $R^{101}$ to $R^{103}$, in $-O-(R^{111}-O)_z-R^{112}$, $R^{111}$ represents a divalent straight chain or branched chain hydrocarbon group having 1 to 30 carbon atoms (preferably 1 to 15 carbon atoms, more preferably 1 to 3 carbon atoms). Examples of the hydrocarbon group include a straight chain or branched chain alkylene group having 1 to 30 carbon atoms, a straight chain or branched chain alkenylene group having 2 to 30 carbon atoms, a straight chain or branched chain alkynylene group having 2 to 30 carbon atoms, and an arylene group having 6 to 30 carbon atoms. Among them, a straight chain or branched chain alkylene group having 1 to 30 carbon atoms is preferable.

As to $R^{111}$, examples of the straight chain or branched chain alkylene group having 1 to 30 carbon atoms (preferably 1 to 15 carbon atoms, more preferably 1 to 3 carbon atoms) include methylene group, ethylene group,

propylene group, butylene group, pentylene group, hexylene group, heptylene group, octylene group, nonylene group, decylene group, undecylene group, dodecylene group, tridecylene group, tetradecylene group, pentadecylene group, hexadecylene group, heptadecylene group, and octadecylene group.

As to $R^{111}$, examples of the straight chain or branched chain alkenylene group having 2 to 30 carbon atoms (preferably 2 to 15 carbon atoms, more preferably 2 or 3 carbon atoms) include vinylene group, 1-propenylene group, 2-propenylene group, 1-butenylene group, 2-butenylene group, 1-pentenylene group, 2-pentenylene group, 1-hexenylene group, 2-hexenylene group, and 1-octenylene group.

As to $R^{111}$, examples of the straight chain or branched chain alkynylene group having 2 to 30 carbon atoms (preferably 2 to 15 carbon atoms, more preferably 2 or 3 carbon atoms) include ethynylene group, propynylene group, butynylene group, pentynylene group , hexynylene group, heptynylene group, octynylene group, nonynylene group, decynylene group, undecynylene group, and dodecynylene group.

As to $R^{111}$, examples of the arylene group having 6 to 30 carbon atoms (preferably 6 to 15 carbon atoms) include phenylene group, tolylene group, xylylene group, and naphthylene group.

z is an integer of 1 to 30, preferably an integer of 2 to 20, more preferably an integer of 3 to 7, and even more preferably 5 or 6.

$R^{112}$ represents a straight chain or branched chain alkyl group having 1 to 30 carbon atoms, a straight chain or branched chain alkenyl group having 2 to 30 carbon atoms, an aryl group having 6 to 30 carbon atoms, or an aralkyl group having 7 to 30 carbon atoms. Among them, a straight chain or branched chain alkyl group having 1 to 30 carbon atoms is preferable.

As to $R^{112}$, examples of the straight chain or branched chain alkyl group having 1 to 30 carbon atoms (preferably 3 to 25 carbon atoms, more preferably 10 to 15 carbon atoms) include methyl group, ethyl group, n-propyl group, isopropyl group, n-butyl group, iso-butyl group, sec-butyl group, tert-butyl group, pentyl group, hexyl group, heptyl group, 2-ethylhexyl group, octyl group, nonyl group, decyl group, undecyl group , dodecyl group, tridecyl group, tetradecyl group, pentadecyl group, and octadecyl group.

As to $R^{112}$, examples of the straight chain or branched chain alkenyl group having 2 to 30 carbon atoms (preferably 3 to 25 carbon atoms, more preferably 10 to 15 carbon atoms) include vinyl group, 1-propenyl group, 2-propenyl group, 1-butenyl group, 2-butenyl group, 1-pentenyl group, 2-pentenyl group, 1-hexenyl group, 2-hexenyl group, 1-octenyl group, decenyl group, undecenyl group, dodecenyl group, tridecenyl group, tetradecenyl group, pentadecenyl group, and octadecenyl group.

As to $R^{112}$, examples of the aryl group having 6 to 30 carbon atoms (preferably 10 to 20 carbon atoms) include phenyl group, tolyl group, xylyl group, naphthyl group, and biphenyl group.

As to $R^{112}$, examples of the aralkyl group having 7 to 30 carbon atoms (preferably 10 to 20 carbon atoms) include benzyl group and phenethyl group.

Specific examples of the group represented by $-O-(R^{111}-O)_z-R^{112}$ include $-O-(C_2H_4-O)_5-C_{11}H_{23}$, $-O-(C_2H_4-O)_5-C_{12}H_{25}$, $-O-(C_2H_4-O)_5-C_{13}H_{27}$, $-O-(C_2H_4-O)_5-C_{14}H_{29}$, $-O-(C_2H_4-O)_5-C_{15}H_{31}$, $-O-(C_2H_4-O)_3-C_{13}H_{27}$, $-O-(C_2H_4-O)_4-C_{13}H_{27}$, $-O-(C_2H_4-O)_6-C_{13}H_{27}$, and $-O-(C_2H_4-O)_7-C_{13}H_{27}$. Among them, $-O-(C_2H_4-O)_5-C_{11}H_{23}$, $-O-(C_2H_4-O)_5-C_{13}H_{27}$, $-O-(C_2H_4-O)_5-C_{15}H_{31}$, and $-O-(C_2H_4-O)_6-C_{13}H_{27}$ are preferable.

As to $R^{104}$, examples of the straight chain or branched chain alkylene group having 1 to 6 carbon atoms (preferably 1 to 5 carbon atoms) include the same groups as for the straight chain or branched chain alkylene group having 1 to 30 carbon atoms for $R^{111}$.

Examples of the compound represented by Formula (2) include 3-mercaptopropyltrimethoxysilane, 3 -mercaptopropyltriethoxysilane, 2-mercaptoethyltrimethoxysilane, 2-mercaptoethyltriethoxysilane, and a compound (Si363 manufactured by Evonik Degussa) represented by the following formula, and the compound represented by the following Formula can be preferably used. One of them may be used alone, or two or more of them may be used in combination.

[Chemical Formula 10]

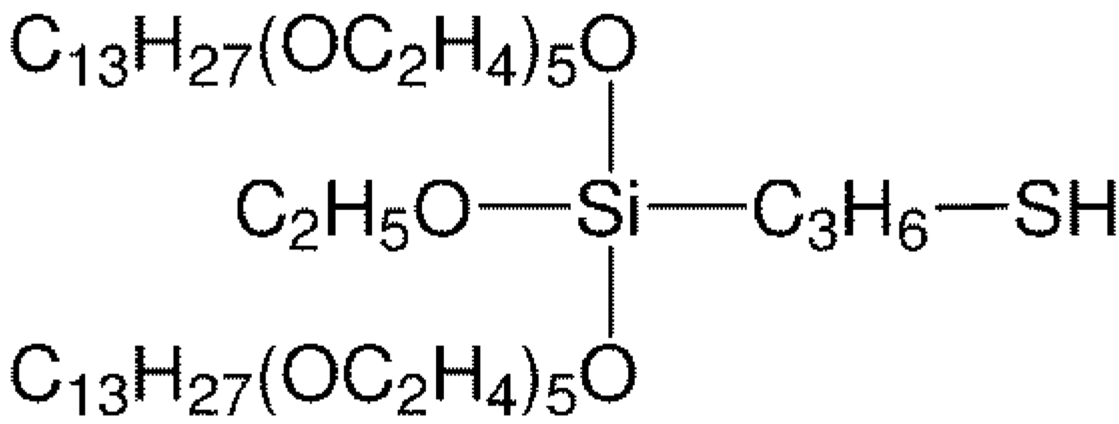

Next, the compound that contains the bond unit A represented by Formula (3) and the bond unit B represented by Formula (4) will be described.

The compound that contains the bond unit A represented by Formula (3) and the bond unit B represented by Formula (4) is allowed to inhibit increase of viscosity during processing, as compared to polysulfide silane such as bis-(3-triethoxysilylpropyl)tetrasulfide. This may be because the sulfide moiety of the bond unit A is a C-S-C bond, and the compound is thermally stable as compared to tetrasulfide or disulfide, and, thus, Mooney viscosity is less likely to increase.

Furthermore, scorch time is inhibited from becoming short as compared to mercapto silane such as 3-mercaptopropyltrimethoxysilane. This may be because, although the bond unit B has a mercapto silane structure, the $-C_7H_{15}$ moiety of the bond unit A covers the -SH group of the bond unit B, and, thus, reaction with a polymer is less likely to occur and scorch is less likely to occur.

From the viewpoint of enhancing the effect of inhibiting increase of viscosity during processing and the effect of inhibiting the scorch time from becoming short as described above, the content of the bond unit A in the silane coupling agent having the above-described structure is preferably not less than 30% by mol and more preferably not less than 50% by mol, and is preferably not greater than 99% by mol and more preferably not greater than 90% by mol. Furthermore, the content of the bond unit B is preferably not less than 1% by mol, more preferably not less than 5% by mol, and even more preferably not less than 10% by mol, and is preferably not greater than 70% by mol, more preferably not greater than 65% by mol, and even more preferably not greater than 55% by mol. Furthermore, the total content of the bond units A and B is preferably not less than 95% by mol, more preferably not less than 98% by mol, and particularly preferably 100% by mol. The content of the bond unit A, B is an amount that is applicable also when the bond unit A, B is located at the end in the silane coupling agent. The form of the bond unit A, B which is at the end in the silane coupling agent is not particularly limited as long as units are formed so as to correspond to Formula (3) and Formula (4) representing the bond units A and B.

Examples of the halogen atom for $R^{201}$ include a chlorine atom, a bromine atom, and a fluorine atom.

As to $R^{201}$, examples of the straight chain or branched chain alkyl group having 1 to 30 carbon atoms include methyl group, ethyl group, n-propyl group, iso-propyl group, n-butyl group, iso-butyl group, sec-butyl group, tert-butyl group, pentyl group, hexyl group, heptyl group, 2-ethylhexyl group, octyl group, nonyl group, and decyl group. The number of carbon atoms in the alkyl group is preferably 1 to 12.

As to $R^{201}$, examples of the straight chain or branched chain alkenyl group having 2 to 30 carbon atoms include vinyl group, 1-propenyl group, 2-propenyl group, 1-butenyl group, 2-butenyl group, 1-pentenyl group, 2-pentenyl group, 1-hexenyl group, 2-hexenyl group, and 1-octenyl group. The number of carbon atoms in the alkenyl group is preferably 2 to 12.

As to $R^{201}$, examples of the straight chain or branched chain alkynyl group having 2 to 30 carbon atoms include ethynyl group, propynyl group, butynyl group, pentynyl group, hexynyl group, heptynyl group, octynyl group, nonynyl group, decynyl group, undecynyl group, and dodecynyl group. The number of carbon atoms in the alkynyl group is preferably 2 to 12.

As to $R^{202}$, examples of the straight chain or branched chain alkylene group having 1 to 30 carbon atoms include ethylene group, propylene group, butylene group, pentylene group, hexylene group, heptylene group, octylene group, nonylene group, decylene group, undecylene group, dodecylene group, tridecylene group, tetradecylene group,

pentadecylene group, hexadecylene group, heptadecylene group, and octadecylene group. The number of carbon atoms in the alkylene group is preferably 1 to 12.

As to $R^{202}$, examples of the straight chain or branched chain alkenylene group having 2 to 30 carbon atoms include vinylene group, 1-propenylene group, 2-propenylene group, 1-butenylene group, 2-butenylene group, 1-pentenylene group, 2-pentenylene group, 1-hexenylene group, 2-hexenylene group, and 1-octenylene group. The number of carbon atoms in the alkenylene group is preferably 2 to 12.

As to $R^{202}$, examples of the straight chain or branched chain alkynylene group having 2 to 30 carbon atoms include ethynylene group, propynylene group, butynylene group, pentynylene group, hexynylene group, heptynylene group, octynylene group, nonynylene group, decynylene group, undecynylene group, and dodecynylene group. The number of carbon atoms in the alkynylene group is preferably 2 to 12.

In the compound that contains the bond unit A represented by Formula (3) and the bond unit B represented by Formula (4), the total number of repetitions (x+y) of the number of repetitions (x) of the bond unit A and the number of repetitions (y) of the bond unit B is preferably in the range of 3 to 300. When the total number of repetitions is in this range, - $C_7H_{15}$ moiety of the bond unit A covers mercaptosilane of the bond unit B. Therefore, scorch time can be inhibited from becoming short, and reactivity with silica and the rubber component can be advantageously assured.

As the compound which contains the bond unit A represented by Formula (3) and the bond unit B represented by Formula (4), for example, NXT-Z30, NXT-Z45, and NXT-Z60 manufactured by Momentive can be used. One of them may be used alone, or two or more of them may be used in combination.

The content of the silane coupling agent having a mercapto group is preferably not less than 0.5 parts by mass, more preferably not less than 1 part by mass, even more preferably not less than 2 parts by mass, and particularly preferably not less than 4 parts by mass, per 100 parts by mass of silica. When the content thereof is less than 0.5 parts by mass, an effect of improvement for low fuel consumption and the like may not be sufficiently obtained. The content thereof is preferably not greater than 20 parts by mass, more preferably not greater than 12 parts by mass, even more preferably not greater than 10 parts by mass, and particularly preferably not greater than 9 parts by mass. When the content thereof is greater than 20 parts by mass, rubber strength and wear resistance tend to be reduced.

According to the present invention, the rubber composition may contain another silane coupling agent in addition to the silane coupling agent having a mercapto group. Examples of the other silane coupling agent include 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilylethyl-N,N-dimethylthiocarbamoyl tetrasulfide, 3-trimethoxysilylpropyl benzothiazole tetrasulfide, 3-triethoxysilylpropyl benzothiazolyl tetrasulfide, 3-triethoxysilylpropyl methacrylate monosulfide, 3-trimethoxysilylpropyl methacrylate monosulfide, bis(3-triethoxysilylpropyl)tetrasulfide, bis(3-triethoxysilylpropyl)trisulfide, bis(3-triethoxysilylpropyl)disulfide, bis(2-triethoxysilylethyl)tetrasulfide, bis(3 -trimethoxysilylpropyl)tetrasulfide, bis(2-trimethoxysilylethyl)tetrasulfide, bis(3 -diethoxymethylsilylpropyl)tetrasulfide, 3 -mercaptopropyl dimethoxymethylsilane, dimethoxymethylsilylpropyl-N,N-dimethylthiocarbamoyl tetrasulfide, and dimethoxymethylsilylpropyl benzothiazole tetrasulfide.

In the present invention, silica is used. By silica being blended, low fuel consumption, wear resistance, and wet grip performance can be improved. Silica is not particularly limited. For example, silica, such as silica prepared by dry process (anhydrous silica) and silica prepared by wet process (hydrous silica), which is generally used in the tire industry can be used. Among them, hydrous silica prepared by wet process is preferable because the hydrous silica has a higher silanol group content. The silica may be used alone, or two or more kinds of the silica may be used in combination.

A nitrogen adsorption specific surface area ($N_2SA$) of the silica is preferably not less than 20 $m^2/g$, more preferably not less than 30 $m^2/g$, and even more preferably not less than 100 $m^2/g$. The $N_2SA$ is preferably not greater than 400 $m^2/g$, more preferably not greater than 300 $m^2/g$, and even more preferably not greater than 280 $m^2/g$. When the $N_2SA$ is within the above-described range, low fuel consumption and processability tend to be obtained in a well-balanced manner. In the description herein, the $N_2SA$ of the silica is a value measured by the BET method in compliance with ASTM D3037-81.

The content of the silica is preferably not less than 20 parts by mass, more preferably not less than 30 parts by mass, and even more preferably not less than 40 parts by mass, per 100 parts by mass of the rubber component. When the content of the silica is not less than 20 parts by mass, an effect of improvement for low fuel consumption by the silica being blended tends to be sufficiently obtained, and an effect of improving wear resistance tends to be sufficiently obtained. The content of the silica is preferably not greater than 120 parts by mass, more preferably not greater than 110 parts by mass, and even more preferably not greater than 100 parts by mass, per 100 parts by mass of the rubber component. When the content of the silica is not greater than 120 parts by mass, deterioration of dispersibility of the silica in rubber can be inhibited, and low fuel consumption and processability tend to be more advantageously obtained, and wear resistance tends to be more advantageously obtained.

The rubber composition, for a tire, according to the present invention can contain, as appropriate, a blending ingredient, other than the above-described components, which is conventionally used in the rubber industry. Example of the blending ingredient other than the above-described components include a reinforcing filler other than silica, a processing aid, zinc oxide, stearic acid, various kinds of anti-aging agents, a softener such as adhesive resin, oil, wax,

a vulcanizing agent such as sulfur, and various kinds of vulcanization accelerators.

As the reinforcing filler other than silica, a reinforcing filler which is conventionally used for a rubber composition for a tire can be used. Examples of the reinforcing filler include carbon black, calcium carbonate, alumina, clay, and talc. Among them, carbon black is preferable because reinforcement and wear resistance are excellent.

The carbon black is not particularly limited, and carbon black, such as GPF, FEF, HAF, ISAF, and SAF, which is generally used in the tire industry can be used. For example, fine particle carbon black manufactured and sold by Mitsubishi Chemical Corporation can be preferably used. One of them can be used alone, or two or more of them can be used in combination.

A nitrogen adsorption specific surface area ($N_2SA$) of the carbon black is preferably not less than 50 $m^2/g$ and more preferably not less than 80 $m^2/g$ from the viewpoint of weather resistance and reinforcement. The $N_2SA$ of the carbon black is preferably not greater than 250 $m^2/g$ and more preferably not greater than 220 $m^2/g$ from the viewpoint of low fuel consumption, dispersibility, fracture properties, and durability. In the description herein, the $N_2SA$ of the carbon black is a value measured in compliance with the A method in JIS K 6217.

When the carbon black is contained, the content of the carbon black is preferably not less than 3 parts by mass and more preferably not less than 5 parts by mass, per 100 parts by mass of the rubber component from the viewpoint of weather resistance. The content of the carbon black is preferably not greater than 40 parts by mass and more preferably not greater than 30 parts by mass from the viewpoint of low fuel consumption and processability.

Examples of the processing aid include fatty acid metal salt, fatty acid amide, amide ester, silica surface active agent, fatty acid ester, a mixture of fatty acid metal salt and amide ester, and a mixture of fatty acid metal salt and fatty acid amide. One of them may be used alone, or two or more of them may be used in combination. Among them, fatty acid metal salt, amide ester, and a mixture of fatty acid metal salt and amide ester or fatty acid amide are preferable, and a mixture of fatty acid metal salt and fatty acid amide is particularly preferable.

Although a fatty acid of the fatty acid metal salt is not particularly limited, a saturated or unsaturated fatty acid (preferably saturated or unsaturated fatty acid having 6 to 28 carbon atoms (more preferably 10 to 25 carbon atoms, even more preferably 14 to 20 carbon atoms) can be used. Examples of the fatty acid include lauric acid, myristic acid, palmitic acid, stearic acid, oleic acid, linoleic acid, linolenic acid, arachidic acid, behenic acid, and nervonic acid. One of them may be used alone, or two or more of them may be used in combination. Among them, a saturated fatty acid is preferable, and a saturated fatty acid having 14 to 20 carbon atoms is more preferable.

Examples of a metal of the fatty acid metal salt include alkali metals such as potassium and sodium, alkaline-earth metals such as magnesium, calcium, and barium, zinc, nickel, and molybdenum. Among them, zinc and calcium are preferable, and zinc is more preferable.

The fatty acid amide may be a saturated fatty acid amide or an unsaturated fatty acid amide. Examples of saturated fatty acid amide include N-(1-oxo-octadecyl)sarcosine, stearic acid amide, and behenic acid amide. Examples of unsaturated fatty acid amide include oleic acid amid and erucic acid amide.

Specific examples of the mixture of fatty acid metal salt and fatty acid amide include WB16, manufactured by Struktol, which is a mixture of fatty acid calcium and fatty acid amide. Specific examples of the fatty acid zinc salt include Ultra-Flow440 manufactured by Performance Additives.

When the processing aid is contained, the content of the processing aid is preferably not less than 0.8 parts by mass and more preferably not less than 1.5 parts by mass, per 100 parts by mass of the rubber component. When the content thereof is less than 0.8 parts by mass, an effect obtained by the addition may not be sufficient. The content of the processing aid is preferably not greater than 10 parts by mass, more preferably not greater than 8 parts by mass, and even more preferably not greater than 6 parts by mass. When the content thereof is greater than 10 parts by mass, slipping among polymers occurs, and a structure in which polymer phases are entangled with each other is less likely to be obtained, and wear resistance tends to be deteriorated and breaking strength tends to be reduced.

Examples of the adhesive resin include a resin such as an aromatic petroleum resin, which is conventionally used for a rubber composition for a tire. Examples of the aromatic petroleum resin include phenolic resin, coumarone-indene resin, terpene resin, styrene resin, acrylic resin, rosin resin, and dicyclopentadiene resin (DCPD resin). Examples of the phenolic resin include Koresin (manufactured by BASF) and TACKIROL (manufactured by TAOKA CHEMICAL COMPANY, LIMITED). Examples of the coumarone-indene resin include Coumarone (manufactured by NITTO CHEMICAL CO., LTD), ESCURON (manufactured by Nippon Steel Chemical Co., ltd.), and Neopolymer (manufactured by Nippon Petrochemicals Co., Ltd.). Examples of the styrene resin include Sylvatraxx (registered trademark) 4401 (manufactured by Arizona Chemical Company). Example of the terpene resin include TR7125 (manufactured by Arizona Chemical Company) and TO125 (manufactured by YASUHARA CHEMICAL CO., LTD.).

A softening point of the adhesive resin is preferably not lower than 40°C and more preferably not lower than 60°C. When the softening point is not lower than 40°C, sufficient grip performance tends to be obtained. The softening point is preferably not higher than 120°C and more preferably not higher than 100°C. When the softening point is not higher than 120°C, sufficient grip performance tends to be obtained. According to the present invention, the softening point of the resin is a softening point measured by using the ring and ball softening point measuring apparatus, in

compliance with JIS K 6220-1: 2001, as a temperature at which the ball drops.

The content of the adhesive resin is preferably not less than 3 parts by mass and more preferably not less than 5 parts by mass, per 100 parts by mass of the rubber component. When the content of the adhesive resin is not less than 3 parts by mass, sufficient grip performance tends to be obtained. The content of the adhesive resin is preferably not greater than 30 parts by mass and more preferably not greater than 25 parts by mass. When the content of the adhesive resin is not greater than 30 parts by mass, sufficient wear resistance tends to be obtained, and low fuel consumption tends to be advantageously obtained.

As zinc oxide, stearic acid, various kinds of anti-aging agents, oil, and wax, those which are conventionally used in the rubber industry can be used.

The vulcanizing agent is not particularly limited, and a vulcanizing agent which is generally used in the rubber industry can be used. A vulcanizing agent containing sulfur atoms is preferable, and preferable examples thereof include powdery sulfur, precipitated sulfur, colloidal sulfur, surface-treated sulfur, and insoluble sulfur.

The vulcanization accelerator is not particularly limited. Examples of the vulcanization accelerator include sulfenamide-based, thiazole-based, thiuram-based, thiourea-based, guanidine-based, dithiocarbamic acid-based, aldehyde-amine-based, aldehyde-ammonia-based, imidazoline-based, and xanthate-based vulcanization accelerators. Among them, in order to advantageously obtain the effect of the present invention, sulfenamide-based, thiuram-based, and guanidine-based vulcanization accelerators are preferable.

Examples of the sulfenamide-based vulcanization accelerator include N-cyclohexyl-2-benzothiazole sulfenamide (CBS), N-t-butyl-2- benzothiazole sulfenamide (TBBS), N- oxyethylene -2-benzothiazyl sulfenamide, N,N'- diisopropyl -2- benzothiazyl sulfenamide, and N,N- dicyclohexyl -2- benzothiazyl sulfenamide. Examples of the thiazole-based vulcanization accelerator include 2-mercaptobenzothiazole and dibenzothiazolyl disulfide. Examples of the thiuram-based vulcanization accelerator include tetramethylthiuram monosulfide, tetramethylthiuram disulfide, and tetrabenzylthiuram disulfide (TBzTD). Examples of the guanidine-based vulcanization accelerator include diphenylguanidine (DPG), diorthotolylguanidine, and orthotolylbiguanidine. One of them may be used alone, or two or more of them may be used in combination. Among them, in order to advantageously obtain the effect of the present invention, TBBS, TBzTD, and DPG are preferable, and TBBS, TBzTD, and DPG are more preferably used in combination.

The manufacturing method for manufacturing a rubber composition for a tire according to the present invention is not particularly limited as long as, before the rubber component and the silane coupling agent having a mercapto group are kneaded, the rubber component and the compound represented by Formula (1) are kneaded, and, further, a rubber component, among the rubber components to be used, having a lower activating ability with respect to the mercapto group is earlier kneaded with the silane coupling agent, as described above. For example, in the manufacturing method for manufacturing a rubber composition for a tire, an X kneading step (step X) of kneading the rubber component mainly with the reinforcing filler such as silica, includes a step X1 of kneading the first rubber component and the compound represented by Formula (1), a step X2 of adding the silane coupling agent having a mercapto group and performing kneading without discharging a kneaded product obtained in the step X1, and a step X3 of further adding the second rubber component and performing kneading without discharging a kneaded product obtained in the step X2, and, after the step X, a Y kneading step (step Y) of kneading chemicals other than the vulcanizing agent and the vulcanization accelerator with the obtained kneaded product, and an F kneading step (step F) of kneading the vulcanizing agent and the vulcanization accelerator are performed. Needless to say, the kneaded product obtained in the step X1 may be discharged once, and subsequently used in step X2. Similarly, the kneaded product obtained in the step X2 may be also discharged once, and subsequently used in the step X3. The present invention has the characteristics that, before the rubber component and the silane coupling agent having a mercapto group are kneaded, the rubber component and the compound represented by Formula (1) are kneaded, and, further, a rubber component, among the rubber component to be used, having a lower activating ability with respect to a mercapto group is earlier kneaded with a coupling agent. According to the characteristics of the present invention, even when the silane coupling agent having a mercapto group is used, an unvulcanized rubber sheet material can be prevented from being degraded, and process passability can be greatly enhanced.

Furthermore, kneading of silica with the rubber component may be performed in any step other than the F kneading step (step F) in which the vulcanizing agent and the vulcanization accelerator are kneaded. Furthermore, kneading is preferably performed such that the total content of the silica is divided over the steps.

In one mode of the manufacturing method for manufacturing a rubber composition for a tire according to the present invention, for example, the first rubber component and the compound represented by Formula (1), and a reinforcing agent such as silica and carbon black are kneaded (step X1), and the silane coupling agent having a mercapto group and silica are added to a product obtained in step X1 and kneaded therewith (step X2), and the second rubber component and silica are added to a product obtained in step X2 and kneaded therewith (step X3), and the resultant product is discharged to obtain a kneaded product X. Thereafter, various other chemicals are added to the obtained kneaded product X and they are kneaded (step Y), and the resultant product is discharged to obtain a kneaded product Y. Subsequently, the vulcanizing agent and the vulcanization accelerator are added to the obtained kneaded product Y

and they are kneaded (step F), thereby obtaining an unvulcanized rubber composition.

The kneading in the step X is preferably performed at the discharge temperature of 140 to 170°C as a whole for 1 to 5 minutes. The kneaded product obtained in step X is cooled generally to 80°C or lower, and preferably to 25 to 45°C, and is preferably used in the subsequent step.

The kneading in the step Y is preferably performed at the discharge temperature of 130 to 160°C for 1 to 5 minutes. The kneaded product obtained in the step Y is cooled generally to 80°C or lower, and preferably to 25 to 45°C, and is preferably used in the subsequent step.

The kneading in the step F is preferably performed at the discharge temperature of 90 to 130°C for 1 to 5 minutes.

For each kneading in the manufacturing method for manufacturing a rubber composition for a tire according to the present invention, a known kneading machine can be used. For example, a device, such as a Banbury mixer, a kneader, and an open roll, which applies mechanical shearing force to a material and performs kneading and mixing, can be used.

A rubber composition, for a tire, according to another embodiment of the present invention is a rubber composition, for a tire, which includes a rubber component (A) containing at least two kinds of rubber components, a compound (B) represented by Formula (1), and a silane coupling agent (C) having a mercapto group, and which is obtained by a first rubber component in the rubber component (A) and the compound (B) being kneaded, and thereafter kneaded with the silane coupling agent (C), and the resultant product being then kneaded with a second rubber component in the rubber component (A). The activating ability of the first rubber component with respect to a mercapto group is lower than that of the second rubber component. The rubber composition, for a tire, according to the present invention has an improved processability. As described above, this is because the compound, represented by Formula (1), which is kneaded with the rubber component forms -S-S- bond with a mercapto group in the blended silane coupling agent having a mercapto group, thereby preventing the rubber component from gelling due to the silane coupling agent. Furthermore, it can be considered that the rubber component having a lower activating ability with respect to a mercapto group is earlier kneaded with the silane coupling agent having a mercapto group, so that, even when there is room for improvement of scavenging the radical by the compound represented by Formula (1), gelling caused by the silane coupling agent having a mercapto group can be assuredly reduced.

The rubber composition, for a tire, according to the present invention can be manufactured in the above-described manufacturing method for manufacturing a rubber composition for a tire according to the present invention. The description herein for the manufacturing method for manufacturing a rubber composition for a tire is applied also to the rubber composition, for a tire, according to the present invention, and description for various materials, blending ratios, properties of the obtained rubber composition for a tire, and the like in the description herein for the manufacturing method for manufacturing a rubber composition for a tire according to the present invention is applied also to the rubber composition, for a tire, according to the present invention.

A tire manufacturing method according to the present invention includes a forming step of forming an unvulcanized tire (green tire) by extruding and processing the rubber composition, for a tire, which is manufactured by the manufacturing method of the present invention, so as to have shapes of tire components such as a tire tread in an unvulcanized state, adhering the resultant product and other tire components to each other on a tire forming machine, and performing forming in a standard method: and a vulcanizing step of heating and pressurizing the unvulcanized tire (green tire) in a vulcanizer. The vulcanization temperature is, for example, not lower than 120°C and not higher than 200°C.

The rubber composition, for a tire, according to the present invention can be used for tire components such as a tire tread, under tread, carcass, sidewall, and bead. In particular, a tire preferably has a tread formed from the rubber composition of the present invention since wear resistance is excellent.

The tire according to the present invention can be manufactured in the above-described tire manufacturing method according to the present invention by using the rubber composition, for a tire, according to the present invention, and may be formed as a pneumatic tire or a non-pneumatic tire. Furthermore, examples of the pneumatic tire include a tire for a passenger car, a tire for truck and bus, a tire for a two-wheeled automotive vehicle, and a high performance tire. In the description herein, the high performance tire is a tire that is excellent particularly in grip performance, and conceptually includes a tire, for racing, used for a racing vehicle.

[Examples]

The present invention will be described below based on examples. However, the present invention is not limited only to the examples.

Various chemicals used in examples and comparative examples will be collectively indicated below.

SBR1: SLR6430 manufactured byTrinseo (index of activating ability with respect to mercapto group: 90, S-SBR, styrene content: 40% by mass, an amount of vinyl bonds: 18% by mol, oil-extended product that contains 37.5 parts by mass of oil, per 100 parts by mass of rubber component)

SBR2: solution-polymerized SBR having index of activating ability with respect to mercapto group: 100, styrene content:

25% by mass, and an amount of vinyl bonds: 44% by mol
BR1: BR150B manufactured by Ube Industries, Ltd. (index of activating ability with respect to mercapto group: 95, an amount of vinyl bonds: 1.5% by mol, cis-1,4- content: 97%)
BR2: BR having index of activating ability with respect to mercapto group: 105, an amount of vinyl bonds: 13% by mol, and cis1,4-content: 36%
Compound represented by Formula (1): TP-50: Rhenogran (registered trademark) TP-50 manufactured by Rhein Chemie (compound represented by Formula (1), $R^1$ to $R^4$: n-butyl group, content of active ingredient: 50% by mass)
Fine particle carbon black: carbon black having nitrogen adsorption specific surface area ($N_2SA$) of 180 $m^2/g$
Silica: ULTRASIL (registered trademark) VN3 ($N_2SA$: 175 $m^2/g$) manufactured by Evonik Degussa
Silane coupling agent A: NXT-Z45 manufactured by Momentive (copolymer of bond unit A and bond unit B (bond unit A: 55% by mol, bond unit B: 45% by mol))
Silane coupling agent B: Si363 manufactured by Evonik Degussa
Zinc oxide: Zinc Oxide No. 1 manufactured by Mitsui Mining & Smelting Co., Ltd.
Stearic acid: bead stearic acid "Tsubaki" manufactured by NOF Corporation
Wax: OZOACE 0355 (paraffin-based) manufactured by NIPPON SEIRO CO., LTD.
Oil: VivaTec400 (TDAE oil) manufactured by H&R
Styrene resin: Sylvatraxx (registered trademark) 4401 manufactured by Arizona Chemical Company (softening point: 85°C)
Anti-aging agent (1): ANTIGENE 6C (N-(1,3-dimethylbutyl)-N'-phenyl-p-phenylenediamine) manufactured by Sumitomo Chemical Co., Ltd.
Anti-aging agent (2): NOCRAC 224 (TMQ, 2,2,4-trimethyl-1,2-dihydroquinoline polymer) manufactured by Ouchi Shinko Chemical Industrial Co., Ltd.
Processing aid (1): Ultra-Flow (registered trademark) 440 (natural fatty acid zinc/metal soap) manufactured by Performance Additives
Processing aid (2): Struktol WB16 (mixture of fatty acid ester and fatty acid metal salt) manufactured by Schill&Seilacher
Sulfur: HK-200-5 (5%-oil-containing powdery sulfur) manufactured by Hosoi Chemical Industry Co., Ltd.
Vulcanization accelerator (1): SANCELER NS-G (N-(tert-butyl)-2- benzothiazolesulfenamide (TBBS)) manufactured by SANSHIN CHEMICAL INDUSTRY CO., LTD.
Vulcanization accelerator (2): SANCELER TBZTD (tetrabenzylthiuram disulfide (TBzTD)) manufactured by SANSHIN CHEMICAL INDUSTRY CO., LTD.
Vulcanization accelerator (3): NOCCELER D (N,N'-diphenylguanidine) manufactured by Ouchi Shinko Chemical Industrial Co., Ltd.

Test for determining activating ability with respect to mercapto group

The reactivity (index of activating ability with respect to mercapto group) of each rubber component used in examples and comparative examples with respect to a mercapto group was measured in the following procedure. 80 parts by mass of silica, 6.4 parts by mass of silane coupling agent A, and 35 parts by mass of oil were kneaded with respect to 100 parts by mass of the rubber component by a 16L B/B mixer for three minutes, and the kneaded product was discharged at the discharge temperature of 160°C. 1 kg of the obtained kneaded product was wound on an 8-inch open roll at the width of 30 cm and the thickness of 2 mm, and kneaded until the temperature of the rubber became 95±5°C, to obtain a rubber sheet. Thereafter, the obtained rubber sheet was cut, and the surface roughness Ra of the surface of the rubber sheet material was measured by using a surface roughness meter based on the arithmetic average roughness Ra in JIS B 0601. The value of the inverse of the obtained surface roughness was indicated as an index, by using SBR 1 as a reference, based on the following formula. The greater the value is, the lower the surface roughness is and the more excellent the activating ability with respect to a mercapto group is.

$$\text{(Index of activating ability with respect to mercapto group)} \\ =100\times\text{surface roughness Ra of SBR 1 as reference/surface roughness Ra of each rubber component)}$$

Examples 1 to 9 and Comparative examples 1 to 13

Various chemicals indicated in step X1 were kneaded by a 1.7L Banbury mixer for 20 seconds according to the blending contents indicated in Table 1, 2, or 3. Thereafter, various chemicals indicated in step X2 in Table 1, 2, or 3 were added to and kneaded with the product obtained in step X1 for 80 seconds, and various chemicals indicated in

step X3 in Table 1, 2, or 3 were further added to and kneaded with the product obtained in step X2 for 80 seconds, to discharge the kneaded product at the discharge temperature of 160°C. The obtained kneaded product was cooled to about 30°C, and was used in the subsequent step.

Next, various other chemicals were added to the obtained kneaded product according to the blending contents indicated in step Y in Table 1, 2, or 3, and the resultant product was kneaded at the discharge temperature of 150°C for 2 minutes. The obtained kneaded product was cooled to about 30°C, and was used in the subsequent step. Thereafter, the sulfur and the vulcanization accelerator were added to the kneaded product obtained in step Y according to the blending contents indicated in step F in Table 1, 2, or 3, and the resultant product was kneaded by using an open roll at the discharge temperature of 125°C for 3 minutes, to obtain an unvulcanized rubber composition.

The obtained unvulcanized rubber compositions were each press-vulcanized at 170°C for 12 minutes by using a mold having the thickness of 2 mm, to obtain a vulcanized rubber composition.

The obtained unvulcanized rubber composition was formed into a shape of a tread, and adhered to other tire components, to form an unvulcanized tire (green tire), and the unvulcanized tire was vulcanized at 165°C for 15 minutes, to manufacture a tire (tire size: 205/55R16).

The rubber compositions in the unvulcanized state in examples 1 to 9 and comparative examples 1 to 13 were evaluated for processability by the following test. The results are indicated in Tables 1 to 3.

<Processability (average surface roughness Ra)>

1 kg of the unvulcanized rubber composition was wound on an 8 inch open roll at the width of 30 cm and the thickness of 2 mm, and kneaded until the temperature of the rubber became 95±5°C, to obtain a rubber sheet. Thereafter, the obtained rubber sheet was cut, and the surface roughness Ra of the surface of the rubber sheet material was measured by using a surface roughness meter based on the arithmetic average roughness Ra in JIS B 0601. The value of the inverse of the obtained surface roughness was indicated as an index as follows. That is, comparative example 1 is used as a reference comparative example for examples 1 to 8, comparative examples 2 to 7, and comparative examples 10 to 13, and comparative example 8 is used as a reference comparative example for example 9 and comparative example 9. The greater the value is, the lower the surface roughness is and the more excellent processability is.

(Processability index)=100×surface roughness Ra of reference comparative example/surface roughness Ra of each example

[Table 1]

| | | | Example | | | | | Comparative example | | | |
|---|---|---|---|---|---|---|---|---|---|---|---|
| | | | 1 | 2 | 3 | 4 | 5 | 1 | 2 | 3 | 4 |
| Blending amount (part(s) by mass) | Process X | Step X1 | | | | | | | | | |
| | | SBR1 | 110 | 110 | 110 | 110 | 110 | 110 | 110 | - | - |
| | | BR1 | - | - | - | - | - | 20 | 20 | 20 | 20 |
| | | Compound TP-50 represented by Formula (1) | 2 | 0.5 | 1 | 3 | 2 | 2 | 2 | 2 | 2 |
| | | Carbon black | 5 | 5 | 5 | 5 | 5 | 5 | 5 | 5 | 5 |
| | | Silica | 55 | 55 | 55 | 55 | 55 | 55 | 55 | 55 | 55 |
| | | Wax | 2 | 2 | 2 | 2 | 2 | 2 | 2 | 2 | 2 |
| | | Processing aid (1) | 2 | 2 | 2 | 2 | 2 | 2 | 2 | 2 | 2 |
| | | Step X2 | | | | | | | | | |
| | | Silica | 35 | 35 | 35 | 35 | 35 | 35 | 35 | 35 | 35 |
| | | Silane coupling agent A | 8 | 8 | 8 | 8 | - | 8 | - | 8 | - |
| | | Silane coupling agent B | - | - | - | - | 8 | - | 8 | - | 8 |
| | | Oil | 3 | 3 | 3 | 3 | 3 | 3 | 3 | 3 | 3 |
| | | Step X3 | | | | | | | | | |
| | | SBR1 | - | - | - | - | - | - | - | 110 | 110 |
| | | BR1 | 20 | 20 | 20 | 20 | 20 | - | - | - | - |
| | | Silica | 10 | 10 | 10 | 10 | 10 | 10 | 10 | 10 | 10 |
| | | Oil | 5 | 5 | 5 | 5 | 5 | 5 | 5 | 5 | 5 |
| | Process Y | Styrene resin | 10 | 10 | 10 | 10 | 10 | 10 | 10 | 10 | 10 |
| | | Stearic acid | 3 | 3 | 3 | 3 | 3 | 3 | 3 | 3 | 3 |
| | | Processing aid (2) | 3 | 3 | 3 | 3 | 3 | 3 | 3 | 3 | 3 |
| | | Oil | 3 | 3 | 3 | 3 | 3 | 3 | 3 | 3 | 3 |
| | Process F | Sulfur | 1.5 | 1.5 | 1.5 | 1.5 | 1.5 | 1.5 | 1.5 | 1.5 | 1.5 |
| | | Vulcanization accelerator (1) | 2 | 2 | 2 | 2 | 2 | 2 | 2 | 2 | 2 |
| | | Vulcanization accelerator (2) | 0.5 | 0.5 | 0.5 | 0.5 | 0.5 | 0.5 | 0.5 | 0.5 | 0.5 |
| | | Vulcanization accelerator (3) | 2 | 2 | 2 | 2 | 2 | 2 | 2 | 2 | 2 |
| | | Zinc oxide | 2 | 2 | 2 | 2 | 2 | 2 | 2 | 2 | 2 |
| | | Anti-aging agent (1) | 3 | 3 | 3 | 3 | 3 | 3 | 3 | 3 | 3 |
| | | Anti-aging agent (2) | 1 | 1 | 1 | 1 | 1 | 1 | 1 | 1 | 1 |
| Evaluation | | Processability index (surface roughness Ra) | 119 | 112 | 115 | 120 | 110 | 100 | 97 | 91 | 87 |

[Table 2]

| | | | Example | | | | Comparative example | | | | |
|---|---|---|---|---|---|---|---|---|---|---|---|
| | | | 6 | 7 | 8 | 9 | 5 | 6 | 7 | 8 | 9 |
| Blending amount (part(s) by mass) | Process X | Step X1 | | | | | | | | | |
| | | SBR1 | 110 | - | - | 82.5 | 110 | - | - | 82.5 | - |
| | | SBR2 | - | - | 80 | - | - | 80 | 80 | - | - |
| | | BR1 | - | 20 | - | - | - | 20 | - | 40 | 40 |
| | | BR2 | - | - | - | - | 20 | - | 20 | - | - |
| | | Compound TP-50 represented by Formula (1) | 2 | 2 | 2 | 2 | 2 | 2 | 2 | 2 | 2 |
| | | Carbon black | 5 | 5 | 5 | 5 | 5 | 5 | 5 | 5 | 5 |
| | | Silica | 55 | 55 | 55 | 55 | 55 | 55 | 55 | 55 | 55 |
| | | Wax | 2 | 2 | 2 | 2 | 2 | 2 | 2 | 2 | 2 |
| | | Processing aid (1) | 2 | 2 | 2 | 2 | 2 | 2 | 2 | 2 | 2 |
| | | Step X2 | | | | | | | | | |
| | | Silica | 35 | 35 | 35 | 35 | 35 | 35 | 35 | 35 | 35 |
| | | Silane coupling agent A | 8 | 8 | 8 | 8 | 8 | 8 | 8 | 8 | 8 |
| | | Oil | 3 | 3 | 3 | 3 | 3 | 3 | 3 | 3 | 3 |
| | | Step X3 | | | | | | | | | |
| | | SBR1 | - | - | - | - | - | - | - | - | 82.5 |
| | | SBR2 | - | 80 | - | - | - | - | - | - | - |
| | | BR1 | - | - | - | 40 | - | - | - | - | - |
| | | BR2 | 20 | - | 20 | - | - | - | - | - | - |
| | | Silica | 10 | 10 | 10 | 10 | 10 | 10 | 10 | 10 | 10 |
| | | Oil | 5 | 5 | 5 | 5 | 5 | 5 | 5 | 5 | 5 |
| | Process Y | Styrene resin | 10 | 10 | 10 | 10 | 10 | 10 | 10 | 10 | 10 |
| | | Stearic acid | 3 | 3 | 3 | 3 | 3 | 3 | 3 | 3 | 3 |
| | | Processing aid (2) | 3 | 3 | 3 | 3 | 3 | 3 | 3 | 3 | 3 |
| | | Oil | 3 | 3 | 3 | 3 | 3 | 3 | 3 | 3 | 3 |
| | Process F | Sulfur | 1.5 | 1.5 | 1.5 | 1.5 | 1.5 | 1.5 | 1.5 | 1.5 | 1.5 |
| | | Vulcanization accelerator (1) | 2 | 2 | 2 | 2 | 2 | 2 | 2 | 2 | 2 |
| | | Vulcanization accelerator (2) | 0.5 | 0.5 | 0.5 | 0.5 | 0.5 | 0.5 | 0.5 | 0.5 | 0.5 |
| | | Vulcanization accelerator (3) | 2 | 2 | 2 | 2 | 2 | 2 | 2 | 2 | 2 |
| | | Zinc oxide | 2 | 2 | 2 | 2 | 2 | 2 | 2 | 2 | 2 |
| | | Anti-aging agent (1) | 3 | 3 | 3 | 3 | 3 | 3 | 3 | 3 | 3 |
| | | Anti-aging agent (2) | 1 | 1 | 1 | 1 | 1 | 1 | 1 | 1 | 1 |
| Evaluation | | Processability index (surface roughness Ra) | 119 | 113 | 109 | 117 | 102 | 98 | 89 | 100 | 93 |

[Table 3]

| | | | Comparative example | | |
|---|---|---|---|---|---|
| | | | 10 | 11 | 12 |
| Blending amount (part(s) by mass) | Process X | Step X1 | | | |
| | | SBR1 | 110 | - | - |
| | | BR1 | - | 20 | 20 |
| | | Compound TP-50 represented by Formula (1) | - | 2 | 2 |
| | | Carbon black | 5 | 5 | 5 |
| | | Silica | 55 | 55 | 55 |
| | | Silane coupling agent A | 5 | - | - |
| | | Wax | 2 | 2 | 2 |
| | | Processing aid (1) | 2 | 2 | 2 |
| | | Step X2 | | | |
| | | SBR1 | - | 110 | 110 |
| | | BR1 | - | - | - |
| | | Silica | 35 | 35 | 35 |
| | | Silane coupling agent A | 3 | 8 | - |
| | | Compound TP-50 represented by Formula (1) | 2 | - | - |
| | | Oil | 3 | 3 | 3 |
| | | Step X3 | | | |
| | | SBR1 | - | - | - |
| | | BR1 | 20 | - | - |
| | | Silica | 10 | 10 | 10 |
| | | Silane coupling agent A | - | - | 8 |
| | | Oil | 5 | 5 | 5 |
| | Process Y | Styrene resin | 10 | 10 | 10 |
| | | Stearic acid | 3 | 3 | 3 |
| | | Processing aid (2) | 3 | 3 | 3 |
| | | Oil | 3 | 3 | 3 |
| | Process F | Sulfur | 1.5 | 1.5 | 1.5 |
| | | Vulcanization accelerator (1) | 2 | 2 | 2 |
| | | Vulcanization accelerator (2) | 0.5 | 0.5 | 0.5 |
| | | Vulcanization accelerator (3) | 2 | 2 | 2 |
| | | Zinc oxide | 2 | 2 | 2 |
| | | Anti-aging agent (1) | 3 | 3 | 3 |
| | | Anti-aging agent (2) | 1 | 1 | 1 |
| Evaluation | | | | | |
| Processability index (surface roughness Ra) | | | 97 | 101 | 102 |

The results in Tables 1, 2, and 3 indicate that, in each of examples 1 to 9 in which the first rubber component, in the rubber component (A), having a lower activating ability with respect to a mercapto group, and the compound represented by Formula (1) were kneaded, and then kneaded with the silane coupling agent having a mercapto group, and the resultant product was then kneaded with the second rubber component, in the rubber component (A), having a higher activating ability with respect to a mercapto group than the first rubber component, the processability was greatly improved as compared to comparative examples 1, 2, and 5 to 8 in which the rubber component (A) containing two kinds of rubbers and the silane coupling agent having a mercapto group were used and the rubber component (A) was simultaneously kneaded at one time. Furthermore, in comparative examples 3, 4, and 9 in which the second rubber

component, in the rubber component (A), having a higher activating ability with respect to a mercapto group was kneaded with the silane coupling agent having a mercapto group earlier than the first rubber component having a lower activating ability with respect to a mercapto group, processability was further reduced as compared to comparative example 1 and comparative example 8. In comparative example 10 in which the first rubber component having a lower activating ability with respect to a mercapto group and the silane coupling agent having a mercapto group were kneaded, and were then kneaded with the compound represented by Formula (1), and the resultant product was then kneaded with the second rubber component having a higher activating ability with respect to mercapto group, it has been found that processability tends to be slightly deteriorated as compared to comparative example 1. In comparative examples 11 and 12 in which the rubber component having a higher activating ability with respect to a mercapto group and the compound represented by Formula (1) were kneaded, and the resultant product was then kneaded with the rubber component having a lower activating ability with respect to a mercapto group and the silane coupling agent having a mercapto group at the same time, or was then kneaded with the rubber component having a lower activating ability with respect to a mercapto group earlier than the silane coupling agent having a mercapto group, the processability is slightly improved as compared to comparative example 1. However, in comparative examples 11 and 12, significant improvement of processability as in example 1 was not found.

Provided are a method for manufacturing a rubber composition for a tire and a tire manufacturing method that allow good processability to be obtained also when a silane coupling agent having a mercapto group is blended.

A method, for manufacturing a rubber composition, for a tire, which contains a rubber component (A) having at least two kinds of rubber components, a compound (B) represented by Formula (1), and a silane coupling agent (C) having a mercapto group, includes: a step X1 of kneading a first rubber component of the rubber component (A) and the compound (B); a step X2 of kneading the silane coupling agent (C) with a kneaded product obtained in the step XI; and a step X3 of kneading a second rubber component of the rubber component (A) with a kneaded product obtained in the step X2. In the method, the first rubber component has a lower activating ability with respect to a mercapto group than the second rubber component. The tire manufacturing method includes the method for manufacturing the rubber composition.

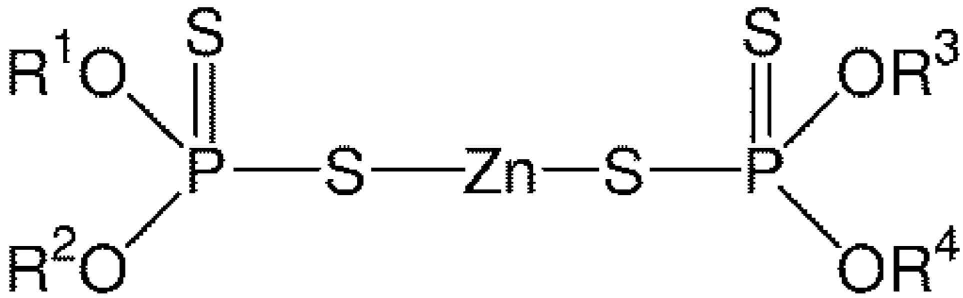

(1)

(In the Formula, $R^1$ to $R^4$ each independently represent a predetermined group.)

## Claims

1. A manufacturing method for manufacturing a rubber composition, for a tire, which contains a rubber component (A) having at least two kinds of rubber components, a compound (B) represented by Formula (1), and a silane coupling agent (C) having a mercapto group, the manufacturing method comprising:

    a step X1 of kneading a first rubber component of the rubber component (A) and the compound (B);
    a step X2 of adding the silane coupling agent (C) to a kneaded product obtained in the step X1, and kneading a product obtained by the addition; and
    a step X3 of adding a second rubber component of the rubber component (A) to a kneaded product obtained in the step X2, and kneading a product obtained by the addition, wherein
    the first rubber component has a lower activating ability with respect to a mercapto group than the second rubber component.

[Chemical Formula 1]

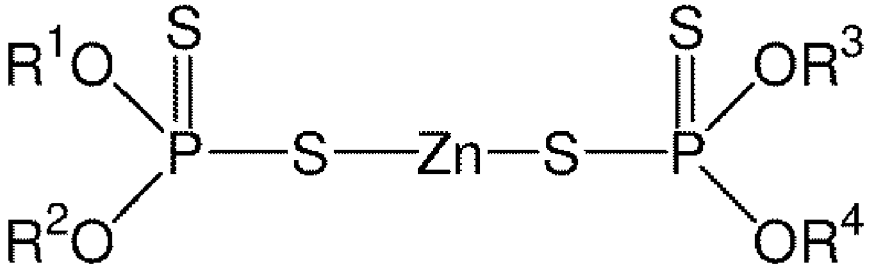

(1)

(In the Formula, $R^1$ to $R^4$ each independently represent a straight chain or branched chain alkyl group having 1 to 18 carbon atoms, or a cycloalkyl group having 5 to 12 carbon atoms.)

**2.** The manufacturing method according to claim 1, wherein
the rubber component (A) includes a diene rubber of not less than 50% by mass, and,
in the diene rubber, a styrene content is 25 to 50% by mass, and an amount of vinyl bonds is 10 to 35% by mol.

**3.** The manufacturing method according to claim 2, wherein the styrene content is not less than twice the amount of vinyl bonds.

**4.** The manufacturing method according to any one of claims 1 to 3, wherein
the silane coupling agent having a mercapto group is a compound represented by Formula (2), and/or a compound that contains a bond unit A represented by Formula (3) and a bond unit B represented by Formula (4).

[Chemical Formula 2]

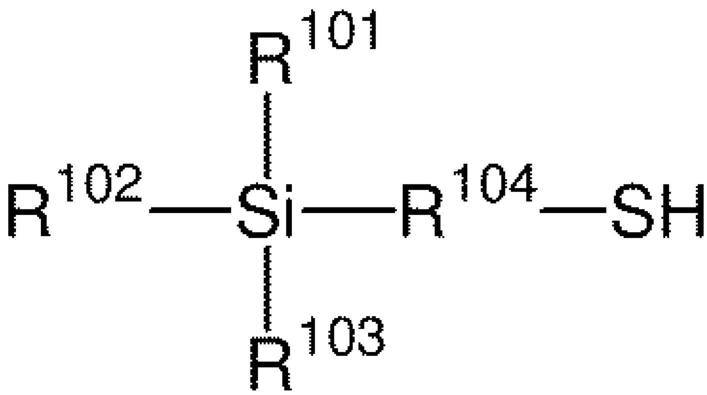

(2)

(In the Formula, $R^{101}$ to $R^{103}$ each represent a straight chain or branched chain alkyl group having 1 to 12 carbon atoms, a straight chain or branched chain alkoxy group having 1 to 12 carbon atoms, or a group represented by $-O-(R^{111}-O)_z-R^{112}$ (z pieces of $R^{111}$ each represent a divalent straight chain or branched chain hydrocarbon group having 1 to 30 carbon atoms. z pieces of $R^{111}$ may be the same or different from each other. $R^{112}$ represents a straight chain or branched chain alkyl group having 1 to 30 carbon atoms, a straight chain or branched chain alkenyl group having 2 to 30 carbon atoms, an aryl group having 6 to 30 carbon atoms, or an aralkyl group having 7 to 30 carbon atoms. z represents an integer of 1 to 30). $R^{101}$ to $R^{103}$ may be the same or different from each other. $R^{104}$ represents a straight chain or branched chain alkylene group having 1 to 6 carbon atoms.)

[Chemical Formula 3]

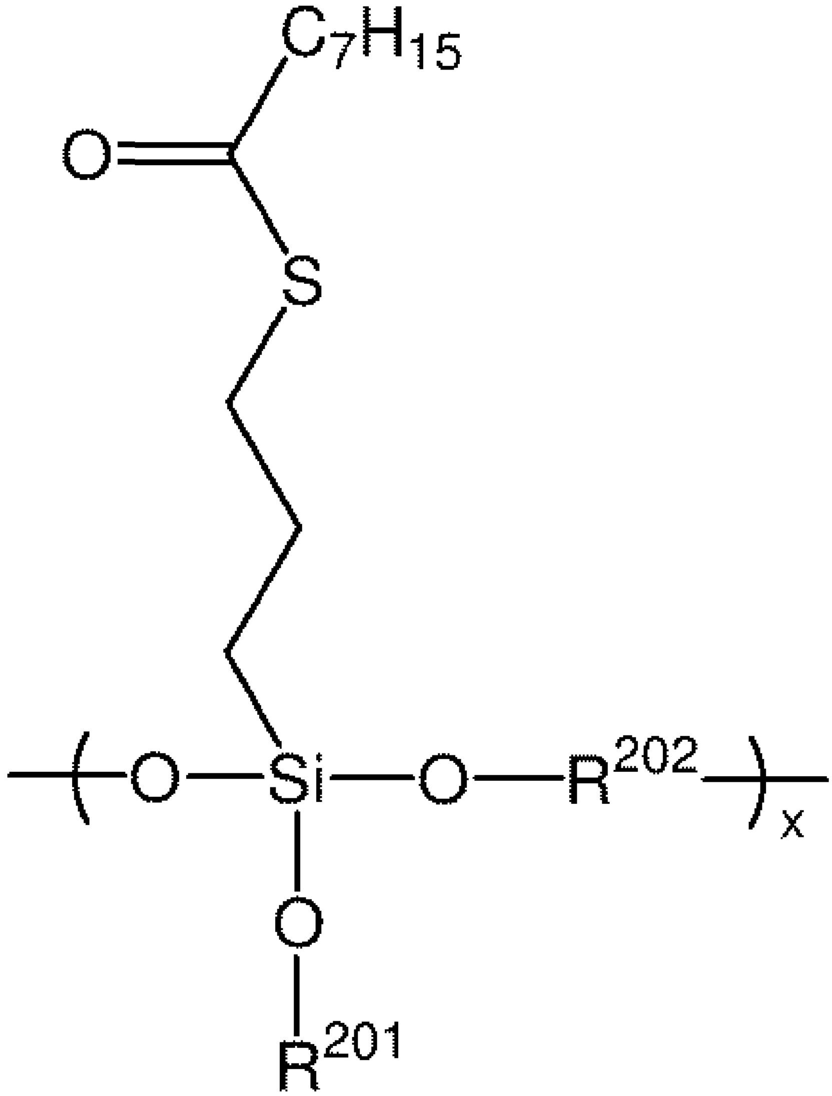

(3)

[Chemical Formula 4]

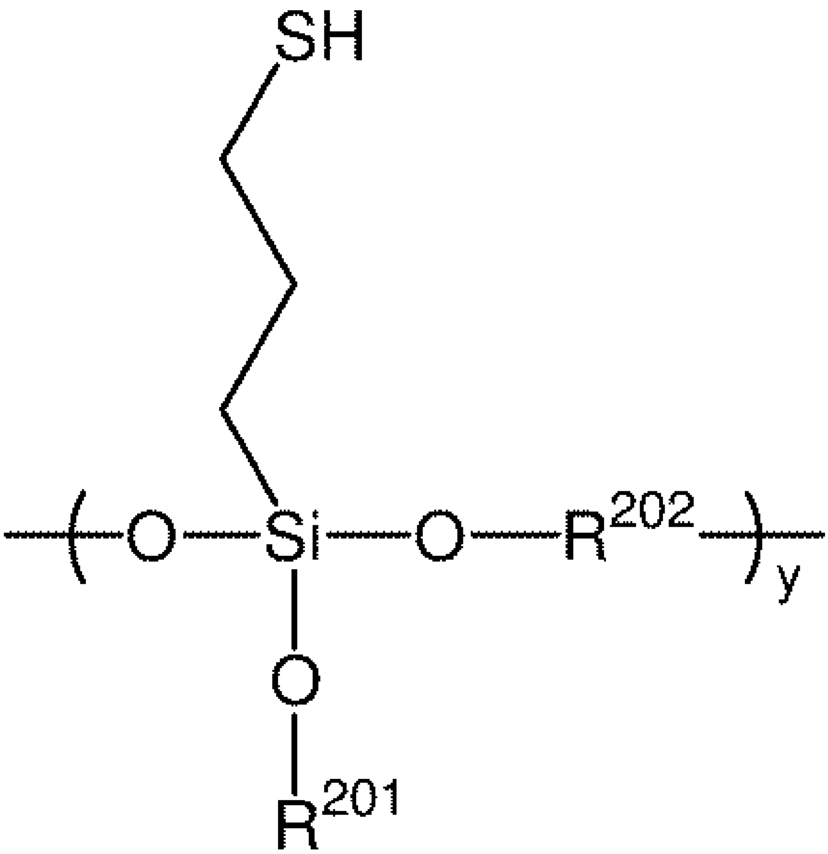

(4)

(In the Formula, x is an integer that is not less than 0, and y is an integer that is not less than 1. $R^{201}$ represents a hydrogen atom, a halogen atom, a straight chain or branched chain alkyl group having 1 to 30 carbon atoms, a straight chain or branched chain alkenyl group having 2 to 30 carbon atoms, a straight chain or branched chain alkynyl group having 2 to 30 carbon atoms, or the alkyl group obtained by substituting a hydrogen atom at the end thereof with a hydroxyl group or a carboxyl group. $R^{202}$ represents a straight chain or branched chain alkylene group having 1 to 30 carbon atoms, a straight chain or branched chain alkenylene group having 2 to 30 carbon atoms, or a straight chain or branched chain alkynylene group having 2 to 30 carbon atoms. $R^{201}$ and $R^{202}$ may form a ring structure.)

**5.** A tire manufacturing method comprising:

a forming step of forming a tire component by using a rubber composition, for a tire, which is obtained by the manufacturing method according to any one of claims 1 to 4 before vulcanization, combining the tire component with other tire components, and forming a green tire, and
a vulcanizing step of vulcanizing the green tire obtained in the forming step.

**6.** A rubber composition for a tire, the rubber composition comprising:

a rubber component (A) having at least two kinds of rubber components;
a compound (B) represented by Formula (1); and
a silane coupling agent (C) having a mercapto group, wherein
for forming the rubber composition,
a kneaded product is obtained by a first rubber component of the rubber component (A) and the compound (B) being kneaded,
the silane coupling agent (C) is added to and kneaded with the kneaded product; and
a second rubber component of the rubber component (A) is added to and kneaded with a kneaded product obtained by the silane coupling agent (C) being added and kneaded, and
the first rubber component has a lower activating ability with respect to a mercapto group than the second rubber component.

[Chemical Formula 5]

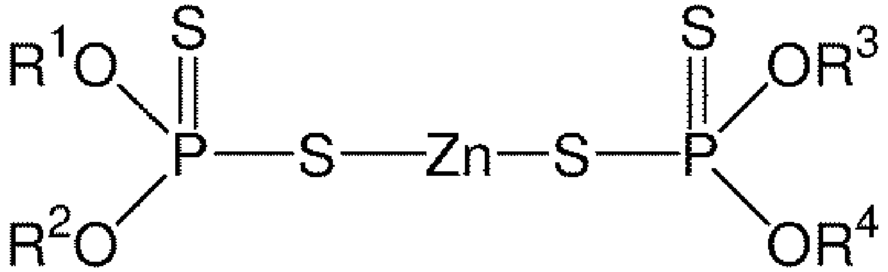

(1)

(In the Formula, $R^1$ to $R^4$ each independently represent a straight chain or branched chain alkyl group having 1 to 18 carbon atoms, or a cycloalkyl group having 5 to 12 carbon atoms.)

7. A tire comprising a tire component formed from the rubber composition, for a tire, according to claim 6.

**Patentansprüche**

1. Herstellungsverfahren zur Herstellung einer Kautschukzusammensetzung für einen Reifen, die eine Kautschukkomponente (A) mit zumindest zwei Arten von Kautschukkomponenten, eine Verbindung (B), die durch die Formel (1) dargestellt wird, und ein Silankupplungsmittel (C) mit einer Mercaptogruppe enthält, wobei das Herstellungsverfahren umfasst:

   einen Schritt X1 des Knetens einer ersten Kautschukkomponente von der Kautschukkomponente (A) und der Verbindung (B);
   einen Schritt X2 der Zugabe des Silankupplungsmittels (C) zu einem in Schritt X1 erhaltenen Knetprodukt und Kneten eines durch die Zugabe erhaltenen Produkts; und
   einen Schritt X3 der Zugabe einer zweiten Kautschukkomponente von der Kautschukkomponente (A) zu einem in Schritt X2 erhaltenen Knetprodukt und Kneten eines durch die Zugabe erhaltenen Produkts, wobei
   die erste Kautschukkomponente eine geringere Aktivierungsfähigkeit bezüglich einer Mercaptogruppe als die zweite Kautschukkomponente hat.

[Chemische Formel 1]

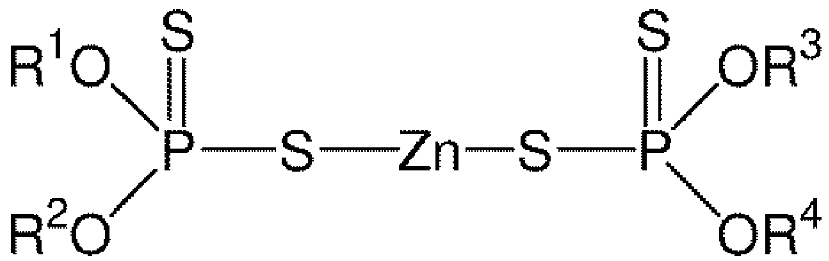

(1)

(In der Formel stellen $R^1$ bis $R^4$ jeweils unabhängig eine geradkettige oder verzweigtkettige Alkylgruppe mit 1 bis 18 Kohlenstoffatomen oder eine Cycloalkylgruppe mit 5 bis 12 Kohlenstoffatomen dar).

2. Herstellungsverfahren nach Anspruch 1, wobei
die Kautschukkomponente (A) einen Dienkautschuk mit nicht weniger als 50 Massen-% enthält und,
in dem Dienkautschuk der Styrolgehalt 25 bis 50 Massen-% und der Anteil der Vinylbindungen 10 bis 35 Mol-% beträgt.

3. Herstellungsverfahren nach Anspruch 2, wobei der Styrolgehalt nicht weniger als das Doppelte der Menge an Vinylbindungen beträgt.

**4.** Herstellungsverfahren nach einem der Ansprüche 1 bis 3, wobei das Silankupplungsmittel mit einer Mercaptogruppe eine Verbindung ist, die durch die Formel (2) dargestellt wird, und/oder eine Verbindung, die eine Bindungseinheit A, die durch die Formel (3) dargestellt wird, und eine Bindungseinheit B, die durch die Formel (4) dargestellt wird, enthält.

[Chemische Formel 2]

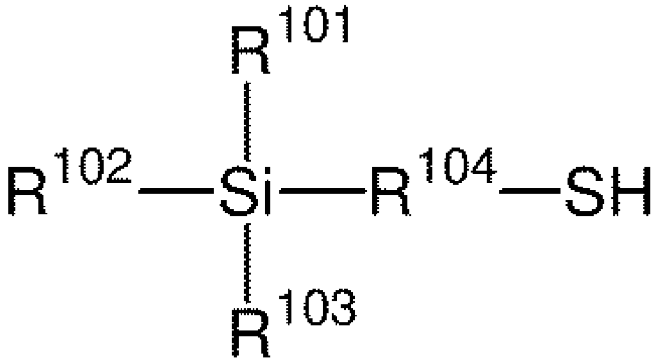

(2)

(In der Formel stellen $R^{101}$ bis $R^{103}$ jeweils eine geradkettige oder verzweigtkettige Alkylgruppe mit 1 bis 12 Kohlenstoffatomen, eine geradkettige oder verzweigtkettige Alkoxygruppe mit 1 bis 12 Kohlenstoffatomen oder eine durch $-O-(R^{111}-O)_z-R^{112}$ dar (z Stücke von $R^{111}$ stellen jeweils eine zweiwertige geradkettige oder verzweigtkettige Kohlenwasserstoffgruppe mit 1 bis 30 Kohlenstoffatomen dar. z Stücke von $R^{111}$ können gleich oder unterschiedlich sein. $R^{112}$ stellt eine geradkettige oder verzweigtkettige Alkylgruppe mit 1 bis 30 Kohlenstoffatomen, eine geradkettige oder verzweigtkettige Alkenylgruppe mit 2 bis 30 Kohlenstoffatomen, eine Arylgruppe mit 6 bis 30 Kohlenstoffatomen oder eine Aralkylgruppe mit 7 bis 30 Kohlenstoffatomen dar. z stellt eine ganze Zahl von 1 bis 30 dar). $R^{101}$ bis $R^{103}$ können gleich oder unterschiedlich sein. $R^{104}$ stellt eine geradkettige oder verzweigtkettige Alkylengruppe mit 1 bis 6 Kohlenstoffatomen dar).

[Chemische Formel 3]

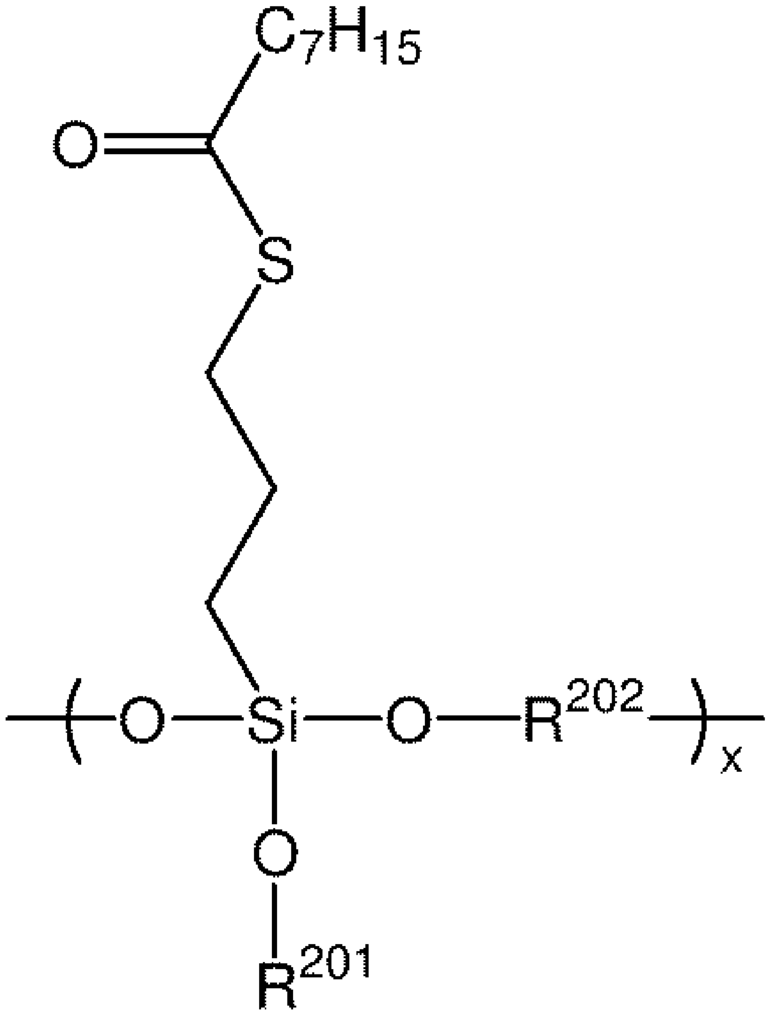

(3)

[Chemische Formel 4]

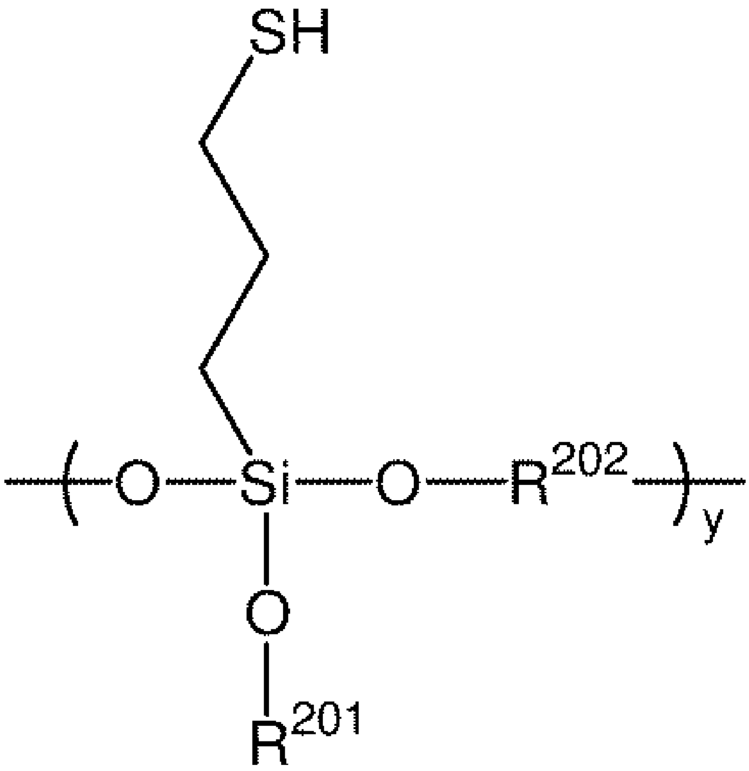

(4)

(In der Formel ist x eine ganze Zahl, die nicht kleiner als 0 ist, und y ist eine ganze Zahl, die nicht kleiner als 1 ist. $R^{201}$ stellt ein Wasserstoffatom, ein Halogenatom, eine geradkettige oder verzweigtkettige Alkylgruppe mit 1 bis 30 Kohlenstoffatomen, eine geradkettige oder verzweigtkettige Alkenylgruppe mit 2 bis 30 Kohlenstoffatomen, eine geradkettige oder verzweigtkettige Alkinylgruppe mit 2 bis 30 Kohlenstoffatomen oder die Alkylgruppe, die durch Substitution eines Wasserstoffatoms an deren Ende durch eine Hydroxylgruppe oder eine Carboxylgruppe erhalten wird, dar. $R^{202}$ stellt eine geradkettige oder verzweigtkettige Alkylengruppe mit 1 bis 30 Kohlenstoffatomen, eine geradkettige oder verzweigtkettige Alkenylengruppe mit 2 bis 30 Kohlenstoffatomen oder eine geradkettige oder verzweigtkettige Alkinylengruppe mit 2 bis 30 Kohlenstoffatomen dar. $R^{201}$ und $R^{202}$ können eine Ringstruktur bilden).

**5.** Reifenherstellungsverfahren, das umfasst:

einen Formgebungsschritt zur Bildung einer Reifenkomponente unter Verwendung einer Kautschukzusammensetzung für einen Reifen, die durch das Herstellungsverfahren nach einem der Ansprüche 1 bis 4 erhalten wird, vor der Vulkanisierung, das Kombinieren der Reifenkomponente mit anderen Reifenkomponenten und die Bildung eines Reifenrohlings, und
einen Vulkanisierungsschritt, bei dem der im Formgebungsschritt erhaltene Reifenrohling vulkanisiert wird.

**6.** Kautschukzusammensetzung für einen Reifen, wobei die Kautschukzusammensetzung umfasst:

eine Kautschukkomponente (A) mit zumindest zwei Arten von Kautschukkomponenten;
eine Verbindung (B), die durch die Formel (1) dargestellt wird; und
ein Silankupplungsmittel (C) mit einer Mercaptogruppe, wobei zur Bildung der Kautschukzusammensetzung,
ein Knetprodukt durch Kneten einer ersten Kautschukkomponente von der Kautschukkomponente (A) und der Verbindung (B) erhalten wird,
das Silankupplungsmittel (C) dem Knetprodukt zugegeben und damit geknetet wird; und
eine zweite Kautschukkomponente von der Kautschukkomponente (A) zu einem Knetprodukt, das durch Zugabe und Kneten des Silankupplungsmittels (C) erhalten wird, zugegeben und damit geknetet wird, und
die erste Kautschukkomponente eine geringere Aktivierungsfähigkeit bezüglich einer Mercaptogruppe als die zweite Kautschukkomponente hat.

[Chemische Formel 5]

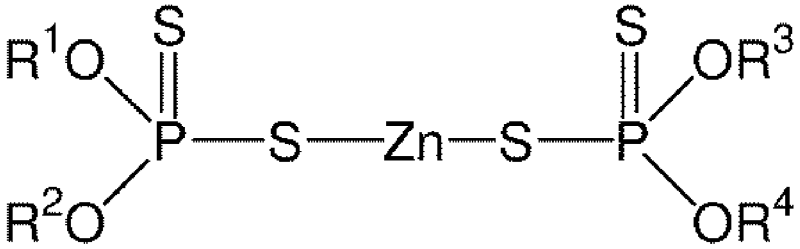

(1)

(In der Formel stellen $R^1$ bis $R^4$ jeweils unabhängig eine geradkettige oder verzweigtkettige Alkylgruppe mit 1 bis 18 Kohlenstoffatomen oder eine Cycloalkylgruppe mit 5 bis 12 Kohlenstoffatomen dar).

**7.** Reifen, der eine Reifenkomponente umfasst, die aus der Kautschukzusammensetzung für einen Reifen nach Anspruch 6 gebildet wird.

## Revendications

**1.** Procédé de fabrication pour fabriquer une composition de caoutchouc, pour un pneu, qui contient un composant de caoutchouc (A) ayant au moins deux types de composants de caoutchouc, un composé (B) représenté par la formule (1), et un agent de couplage à base de silane (C) ayant un groupe mercapto, le procédé de fabrication comprenant :

une étape X1 de malaxage d'un premier composant de caoutchouc du composant de caoutchouc (A) et du composé (B) ;
une étape X2 d'ajout de l'agent de couplage à base de silane (C) à un produit malaxé obtenu dans l'étape X1, et de malaxage d'un produit obtenu par l'ajout ; et
une étape X3 d'ajout d'un second composant de caoutchouc du composant de caoutchouc (A) à un produit malaxé obtenu dans l'étape X2, et de malaxage d'un produit obtenu par l'ajout, dans lequel
le premier composant de caoutchouc présente une capacité d'activation plus faible par rapport à un groupe mercapto que le second composant de caoutchouc.

[Formule chimique 1]

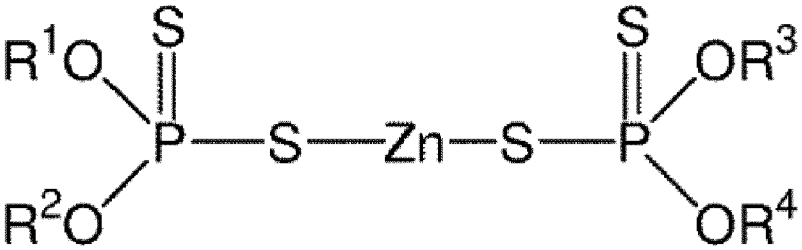

(1)

(Dans la formule, $R^1$ à $R^4$ représentent chacun indépendamment un groupe alkyle à chaîne linéaire ou à chaîne ramifiée ayant 1 à 18 atomes de carbone, ou un groupe cycloalkyle ayant 5 à 12 atomes de carbone.)

**2.** Procédé de fabrication selon la revendication 1, dans lequel
le composant de caoutchouc (A) inclut un caoutchouc diénique à pas moins de 50 % en masse et,
dans le caoutchouc diénique, une teneur en styrène est de 25 à 50 % en masse, et une quantité de liaisons vinyliques est de 10 à 35 % en mole.

**3.** Procédé de fabrication selon la revendication 2, dans lequel la teneur en styrène n'est pas inférieure à deux fois la quantité de liaisons vinyliques.

**4.** Procédé de fabrication selon l'une quelconque des revendications 1 à 3, dans lequel

l'agent de couplage à base de silane ayant un groupe mercapto est un composé représenté par la formule (2), et/ou un composé qui contient un motif de liaison A représenté par la formule (3) et un motif de liaison B représenté par la formule (4).

[Formule chimique 2]

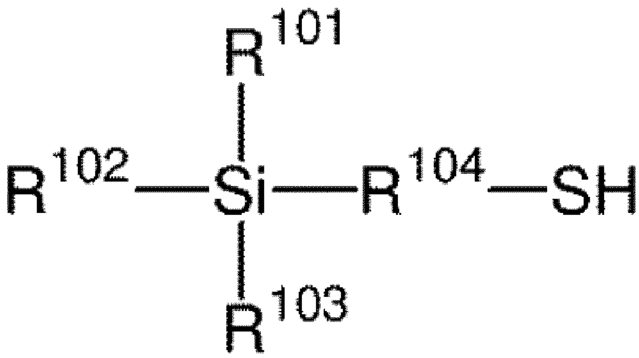

(2)

(Dans la formule, $R^{101}$ à $R^{103}$ représentent chacun un groupe alkyle à chaîne linéaire ou à chaîne ramifiée ayant 1 à 12 atomes de carbone, un groupe alcoxy à chaîne linéaire ou à chaîne ramifiée ayant 1 à 12 atomes de carbone, ou un groupe représenté par $-O-(R^{111}-O)_z-R^{112}$ (z morceaux de $R^{111}$ représentent chacun un groupe hydrocarboné divalent à chaîne linéaire ou à chaîne ramifiée ayant 1 à 30 atomes de carbone, z morceaux de $R^{111}$ peuvent être identiques les uns aux autres ou différents les uns des autres. $R^{112}$ représente un groupe alkyle à chaîne linéaire ou à chaîne ramifiée ayant 1 à 30 atomes de carbone, un groupe alcényle à chaîne linéaire ou à chaîne ramifiée ayant 2 à 30 atomes de carbone, un groupe aryle ayant 6 à 30 atomes de carbone, ou un groupe aralkyle ayant 7 à 30 atomes de carbone, z représente un nombre entier allant de 1 à 30). $R^{101}$ à $R^{103}$ peuvent être identiques les uns aux autres ou différents les uns des autres. $R^{104}$ représente un groupe alkylène à chaîne linéaire ou à chaîne ramifiée ayant 1 à 6 atomes de carbone.)

[Formule chimique 3]

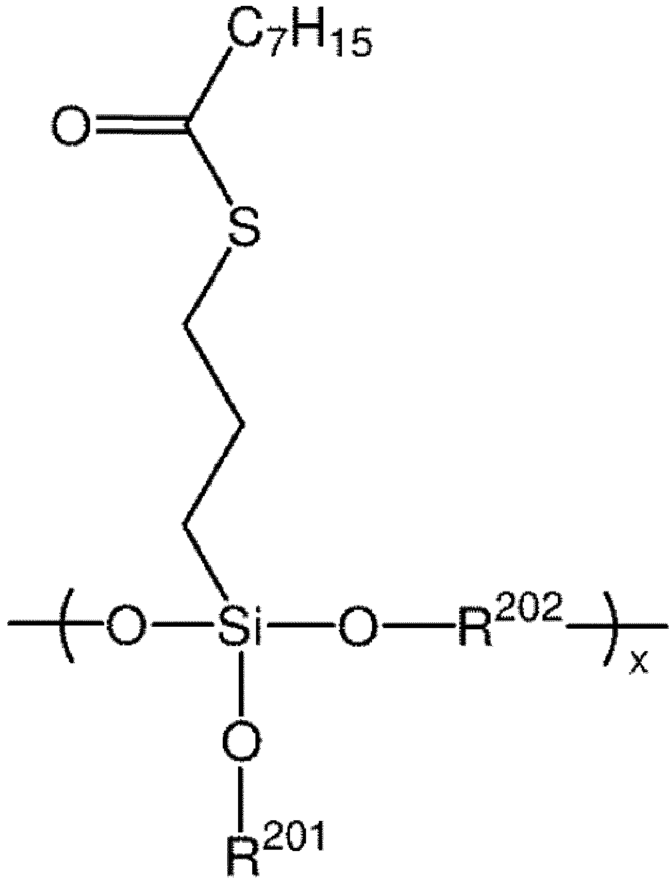

(3)

[Formule chimique 4]

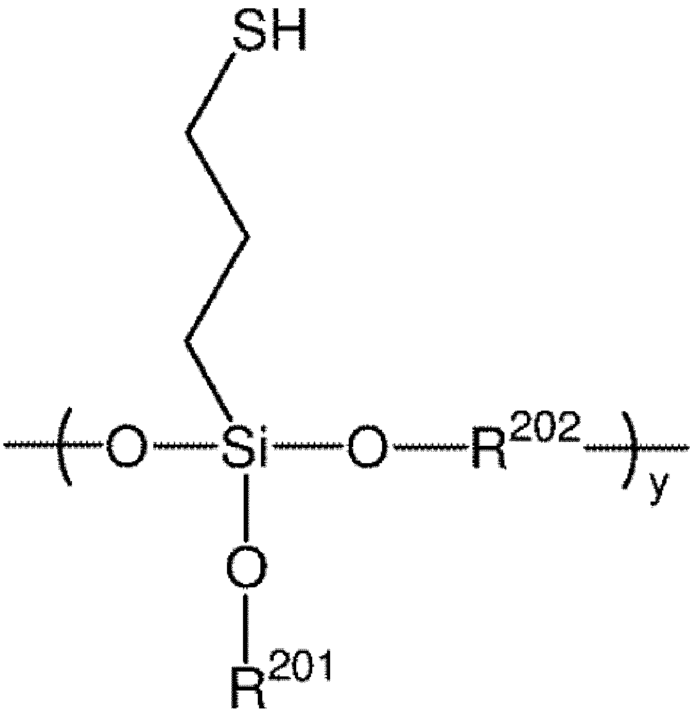

(4)

(Dans la formule, x est un nombre entier qui n'est pas inférieur à 0, et y est un nombre entier qui n'est pas inférieur

à 1. $R^{201}$ représente un atome d'hydrogène, un atome d'halogène, un groupe alkyle à chaîne linéaire ou à chaîne ramifiée ayant 1 à 30 atomes de carbone, un groupe alcényle à chaîne linéaire ou à chaîne ramifiée ayant 2 à 30 atomes de carbone, un groupe alcynyle à chaîne linéaire ou à chaîne ramifiée ayant 2 à 30 atomes de carbone, ou le groupe alkyle obtenu en remplaçant un atome d'hydrogène à l'extrémité de celui-ci par un groupe hydroxyle ou un groupe carboxyle. $R^{202}$ représente un groupe alkylène à chaîne linéaire ou à chaîne ramifiée ayant 1 à 30 atomes de carbone, un groupe alcénylène à chaîne linéaire ou à chaîne ramifiée ayant 2 à 30 atomes de carbone, ou un groupe alcynylène à chaîne linéaire ou à chaîne ramifiée ayant 2 à 30 atomes de carbone. $R^{201}$ et $R^{202}$ peuvent former une structure cyclique.)

**5.** Procédé de fabrication d'un pneu comprenant :

une étape de formation comprenant la formation d'un composant de pneu en utilisant une composition de caoutchouc, pour un pneu, qui est obtenue par le procédé de fabrication selon l'une quelconque des revendications 1 à 4 avant vulcanisation, la combinaison du composant de pneu avec d'autres composants de pneu, et la formation d'un pneu cru, et
une étape de vulcanisation comprenant la vulcanisation du pneu cru obtenu dans l'étape de formation.

**6.** Composition de caoutchouc pour un pneu, la composition de caoutchouc comprenant :

un composant de caoutchouc (A) ayant au moins deux types de composants de caoutchouc ;
un composé (B) représenté par la formule (1) ; et
un agent de couplage à base de silane (C) ayant un groupe mercapto, dans lequel pour former la composition de caoutchouc,
un produit malaxé est obtenu par le malaxage d'un premier composant de caoutchouc du composant de caoutchouc (A) et du composé (B),
l'agent de couplage à base de silane (C) est ajouté au et malaxé avec le produit malaxé ; et
un second composant de caoutchouc du composant de caoutchouc (A) est ajouté à et malaxé avec un produit malaxé obtenu par l'ajout et le malaxage de l'agent de couplage à base de silane (C), et
le premier composant de caoutchouc présente une capacité d'activation plus faible par rapport à un groupe mercapto que le second composant de caoutchouc.

[Formule chimique 5]

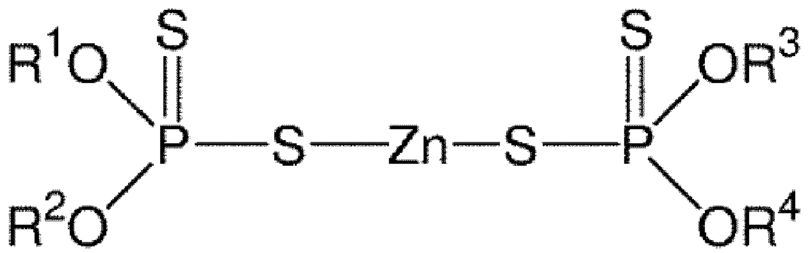

(1)

(Dans la formule, $R^1$ à $R^4$ représentent chacun indépendamment un groupe alkyle à chaîne linéaire ou à chaîne ramifiée ayant 1 à 18 atomes de carbone, ou un groupe cycloalkyle ayant 5 à 12 atomes de carbone.)

**7.** Pneu comprenant un composant de pneu formé à partir de la composition de caoutchouc, pour un pneu, selon la revendication 6.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2009120819 A
- JP 2012046602 A